# EUROPEAN PATENT SPECIFICATION

(11) **EP 4 214 986 B1**
(45) Date of publication and mention of the grant of the patent: **27.08.2025**
(21) Application number: 20958055.4
(22) Date of filing: 21.10.2020
(51) Int. Cl.: H04W 72/04, H04L 1/1607, H04L 1/1829

(54) **SYSTEMS AND METHODS FOR BEAM INDICATION RELATED DOWNLINK CONTROL INFORMATION RETRANSMISSION USING HYBRID AUTOMATIC REPEAT REQUEST ACKNOWLEDGEMENT PROCEDURE**
SYSTEME UND VERFAHREN ZUR RÜCKÜBERTRAGUNG VON STRAHLANZEIGEBEZOGENEN DOWNLINK-STEUERINFORMATIONEN UNTER VERWENDUNG EINES VERFAHRENS ZUR BESTÄTIGUNG HYBRIDER AUTOMATISCHER WIEDERHOLUNGSANFRAGEN
SYSTÈMES ET PROCÉDÉS DE RETRANSMISSION D'INFORMATIONS DE COMMANDE DE LIAISON DESCENDANTE ASSOCIÉES À UNE INDICATION DE FAISCEAU, À L'AIDE D'UNE TECHNIQUE D'ACCUSÉ DE RÉCEPTION DE DEMANDE DE RÉPÉTITION AUTOMATIQUE HYBRIDE

(43) Date of publication of application: 26.07.2023
(73) Proprietor: ZTE Corporation, Shenzhen, Guangdong 518057 (CN)
(72) Inventor: GAO, Bo, Shenzhen, Guangdong 518057 (CN); LU, Zhaohua, Shenzhen, Guangdong 518057 (CN); JIANG, Chuangxin, Shenzhen, Guangdong 518057 (CN); ZHANG, Shujuan, Shenzhen, Guangdong 518057 (CN); HE, Zhen, Shenzhen, Guangdong 518057 (CN)
(74) Representative: Vossius & Partner Patentanwälte Rechtsanwälte mbB
(86) International application number: PCT/CN2020/122326
(87) International publication number: WO 2022/082472

(56) References cited:
- WO-A1-2017/195168
- WO-A1-2018/142204
- WO-A1-2019/210875
- US-A1- 2019 173 622
- SAMSUNG: "Corrections on CA operation", vol. RAN WG1, no. Athens, Greece; 20180226 - 20180302, 17 February 2018 (2018-02-17), XP051397785, Retrieved from the Internet <URL:http://www.3gpp.org/ftp/tsg%5Fran/WG1%5FRL1/TSGR1%5F92/Docs/> [retrieved on 20180217]
- MEDIATEK INC.: "On Remaining Details for HARQ-ACK Codebook", 3GPP DRAFT; R1-1800608 ON REMAINING DETAILS FOR HARQ-ACK CODEBOOK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Vancouver, Canada; 20180122 - 20180126, 13 January 2018 (2018-01-13), Mobile Competence Centre ; 650, route des Lucioles ; F-06921 Sophia-Antipolis Cedex ; France , XP051384949

## Description

### TECHNICAL FIELD

The disclosure relates generally to wireless communications, including but not limited to systems and methods for beam indication related downlink control information (DCI) retransmission using a hybrid automatic repeat request acknowledgement (HARQ-ACK) procedure.

### BACKGROUND

The standardization organization Third Generation Partnership Project (3GPP) is currently in the process of specifying a new Radio Interface called 5G New Radio (5G NR) as well as a Next Generation Packet Core Network (NG-CN or NGC). The 5G NR will have three main components: a 5G Access Network (5G-AN), a 5G Core Network (5GC), and a User Equipment (UE). In order to facilitate the enablement of different data services and requirements, the elements of the 5GC, also called Network Functions, have been simplified with some of them being software based, and some being hardware based, so that they could be adapted according to need.

3GPP R1-1801989, SAMSUNG: "Corrections on CA operation", 2018 and US 2019/173622 A1 are documents of the related art.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional. The example embodiments disclosed herein are directed to solving the issues relating to one or more of the problems presented in the prior art, as well as providing additional features that will become readily apparent by reference to the following detailed description when taken in conjunction with the accompany drawings. In accordance with various embodiments, example systems, methods, devices and computer program products are disclosed herein. It is understood, however, that these embodiments are presented by way of example and are not limiting, and it will be apparent to those of ordinary skill in the art who read the present disclosure that various modifications to the disclosed embodiments can be made while remaining within the scope of this disclosure.

At least one aspect is directed to a system, method, apparatus, or a computer-readable medium. A wireless communication device may receive a downlink control information from a wireless communication node. The wireless communication device may determine a location of hybrid automatic repeat request acknowledgement (HARQ-ACK) information for a procedure associated with the DCI in a HARQ-ACK codebook. The wireless communication device may determine a first physical uplink control (PUCCH) resource. The wireless communication device may transmit a PUCCH transmission that carries the HARQ-ACK information to the wireless communication node.

In some embodiments, the procedure may comprise at least one of a reference channel determination, a downlink (DL) channel reception, a DL channel release, a DCI reception, a physical downlink control channel (PDCCH) reception or a beam state indication. In some embodiments, the first PUCCH resource can be configured for the procedure using a radio resource control (RRC) signaling or a medium access control control element (MAC CE) signaling. In some embodiments, the first PUCCH resource may be indicated by a PUCCH resource indicator (PRI) in the DCI. In some embodiments, the HARQ-ACK codebook may be carried by a second PUCCH resource. In some embodiments, the wireless communication device may determine the second PUCCH resource from a set of PUCCH resources that is associated with a same time unit for PUCCH transmission corresponding to the HARQ-ACK information. In some embodiments, the set of PUCCH resources comprises at least one candidate resource for PUCCH transmission that carries one or more HARQ-ACK information.

In some embodiments, a time offset between the DCI and the PUCCH transmission may be determined according to a first parameter. In some embodiments, the first parameter may be configured according to a predefined configuration, a capability of the wireless communication device, a radio resource control (RRC) signaling, a medium access control control element (MAC CE) signaling, or another DCI. In some embodiments, the first parameter may indicate a number of available UL time units relative to a time unit of the DCI. In some embodiments, the PUCCH transmission may be in a first uplink time unit after a time unit of the DCI. In some embodiments, the location of the HARQ-ACK information in the HARQ-ACK codebook may correspond to a first bit, a last bit or a predefined bit of the HARQ-ACK codebook. In some embodiments, the HARQ-ACK information may be located prior to or after a HARQ-ACK codebook for an associated physical downlink shared channel (PDSCH) reception or release.

In some embodiments, the wireless communication device may generate a non-acknowledgment (NACK) value for the HARQ-ACK information if the wireless communication device fails to detect the DCI. In some embodiments, the wireless communication device may generate an acknowledgment (ACK) value for the HARQ-ACK information if the wireless communication device detects the DCI. In some embodiments, the DCI may trigger/include an indication of a beam state. In some embodiments, the beam state may be applied to a downlink or uplink signal Q time units after transmitting the HARQ-ACK information. In some embodiments, Q may be determined according to a predefined configuration, a capability of the wireless communication device, a radio resource control (RRC) signaling, a medium access control control element (MAC CE) signaling, or another DCI.

In some embodiments, a mode of the HARQ-ACK codebook may be configured as "semi-static". In some embodiments, the location of the HARQ-ACK information may be determined according to at least one of: a time offset from a downlink data channel to a corresponding HARQ-ACK, a time domain resource parameter, a subcarrier spacing for downlink, a subcarrier spacing for uplink, or at least one parameter for downlink and uplink patterns. In some embodiments, the time offset may be indicated or selected from a set of time offsets from the downlink data channel to the corresponding HARQ-ACK. In some embodiments, the time offset may be indicated or selected from a set of default time offsets from the downlink data channel to the corresponding HARQ-ACK, if the DCI has DCI format 1_0 or the set of time offsets is not configured. In some embodiments, the time offset may indicate a number of available uplink time units relative to a time unit of the DCI. In some embodiments, the time domain resource parameter may be indicated or selected from a set of time domain resource parameters for a downlink signal. In some embodiments, the procedure may comprise a reference channel determination. In some embodiments, a reference channel may be associated with the time domain resource parameter. In some embodiments, the reference channel may be used for determining the location of the HARQ-ACK information in the HARQ-ACK codebook.

In some embodiments, the reference channel determination may be in a same time unit as the DCI. In some embodiments, a slot offset between the DCI and the reference channel determination, a slot offset between the DCI and the DL channel reception or a slot offset between the DCI and the DL channel release may be zero. In some embodiments, the location of the HARQ-ACK information may be the same as a location of a HARQ-ACK information corresponding to a reference channel or downlink (DL) channel reception determined using the time domain resource parameter. In some embodiments, a mode of the HARQ-ACK codebook may be configured as "dynamic". In some embodiments, the location of the HARQ-ACK information may be determined according to at least one of: a time offset from the DCI or an associated physical downlink control channel (PDCCH), to the HARQ-ACK information, a time offset from the DCI or the associated PDCCH, to a downlink data channel (e.g., PDSCH), a time offset from a downlink data channel (e.g., PDSCH) to the HARQ-ACK information, a PDCCH monitoring occasion, or a downlink assignment index (DAI) parameter.

In some embodiments, the DAI parameter may comprise at least one of a counter DAI and a total DAI. In some embodiments, the DAI parameter may be associated with a control resource set (CORESET) pool identifier (ID) or a set of one or more DCI formats. In some embodiments, the wireless communication device may determine, according to a value of the counter DAI, a counter for bits of the HARQ-ACK information. In some embodiments, the DCI may include the value of the counter DAI. In some embodiments, a value of the counter DAI may be smaller than a value of the total DAI after a last monitored occasion. In some embodiments, the counter for bits of the HARQ-ACK information may have the value of the counter DAI + 1.

In some embodiments, the wireless communication device may receive radio resource control (RRC) signaling or a medium access control control element (MAC CE) from the wireless communication node. In some embodiments, the RRC signaling or MAC CE signaling may configure or reconfigure one or more parameters corresponding to the DCI. In some embodiments, the one or more parameters may comprise at least one of: a specific radio network temporary identifier (RNTI), a parameter of a starting bit indication, a number of indicated beam states, or a type of HARQ-ACK procedure corresponding to the DCI, comprising semi-static or dynamic. In some embodiments, the one or more parameters may comprise at least one of: support of downlink assignment index (DAI) or total DAI field in a DCI, one or more control resource sets (CORESETs) or search space sets associated with the DCI, a CORESET pool identifier (ID), an ID of the wireless communication device, or an antenna group of the wireless communication device.

In some embodiments, the wireless communication device may receive a configuration for the wireless communication device to support a HARQ-ACK procedure for the DCI from the wireless communication node. In some embodiments, the wireless communication device may receive the configuration responsive to a sounding reference signal (SRS), a physical uplink control channel (PUCCH) and a physical uplink shared channel (PUSCH) not being configured with spatial relation information. In some embodiments, the wireless communication device may receive the configuration responsive to the SRS, the PUSCH and the PUCCH not being configured with an uplink power control parameter. In some embodiments, the wireless communication device may receive the configuration responsive to a specific radio resource control (RRC) signaling.

In some embodiments, the SRS, the PUSCH and the PUCCH may not be configured with a parameter of path-loss reference signal (PL-RS). In some embodiments, the SRS associated with the PUSCH may not be configured with the parameter of PL-RS. In some embodiments, the SRS for non-codebook or codebook transmission, may not be configured with the parameter of PL-RS. In some embodiments, a HARQ process number field in the DCI may be set to a specific value. In some embodiments, a redundancy version field in the DCI may be set to a specific value. In some embodiments, a modulation and coding scheme (MCS) field in the DCI may be set to a specific value. In some embodiments, a frequency domain resource assignment field in the DCI may be set to a specific value. In some embodiments, an uplink or downlink shared channel indicator field in the DCI may be set to a specific value. In some embodiments, the uplink or downlink shared channel indicator field may be set to a specific value. In some embodiments, an uplink or downlink shared channel can be precluded from being transmitted.

At least one aspect is directed to a system, method, apparatus, or a computer-readable medium. A wireless communication node may transmit a downlink control information to a wireless communication device. The wireless communication device may determine a location of hybrid automatic repeat request acknowledgement (HARQ-ACK) information for a procedure associated with the DCI in a HARQ-ACK codebook. The wireless communication device may determine a first physical uplink control (PUCCH) resource. The wireless communication node may receive a PUCCH transmission that carries the HARQ-ACK information from the wireless communication device.

In some embodiments, the procedure may comprise at least one of a reference channel determination, a downlink (DL) channel reception, a DL channel release, a DCI reception, a physical downlink control channel (PDCCH) reception or a beam state indication. In some embodiments, the first PUCCH resource can be configured for the procedure using a radio resource control (RRC) signaling or a medium access control control element (MAC CE) signaling. In some embodiments, the first PUCCH resource may be indicated by a PUCCH resource indicator (PRI) in the DCI. In some embodiments, the HARQ-ACK codebook may be carried by a second PUCCH resource. In some embodiments, the wireless communication device may determine the second PUCCH resource from a set of PUCCH resources that is associated with a same time unit for PUCCH transmission corresponding to the HARQ-ACK information. In some embodiments, the set of PUCCH resources comprises at least one a candidate resource for PUCCH transmission that carries one or more HARQ-ACK information.

In some embodiments, a time offset between the DCI and the PUCCH transmission may be determined according to a first parameter. In some embodiments, the first parameter may be configured according to a predefined configuration, a capability of the wireless communication device, a radio resource control (RRC) signaling, a medium access control control element (MAC CE) signaling, or another DCI. In some embodiments, the first parameter may indicate a number of available UL time units relative to a time unit of the DCI. In some embodiments, the PUCCH transmission may be in a first uplink time unit after a time unit of the DCI. In some embodiments, the location of the HARQ-ACK information in the HARQ-ACK codebook may correspond to a first bit, a last bit or a predefined bit of the HARQ-ACK codebook. In some embodiments, the HARQ-ACK information may be located prior to or after a HARQ-ACK codebook for an associated physical downlink shared channel (PDSCH) reception or release.

In some embodiments, the wireless communication device may generate a non-acknowledgment (NACK) value for the HARQ-ACK information if the wireless communication device fails to detect the DCI. In some embodiments, the wireless communication device may generate an acknowledgment (ACK) value for the HARQ-ACK information if the wireless communication device detects the DCI. In some embodiments, the DCI may trigger/include an indication of a beam state. In some embodiments, for instance when the triggering/indication occurs, the beam state may be applied to a downlink or uplink signal Q time units after transmitting the HARQ-ACK information. In some embodiments, Q may be determined according to a predefined configuration, a capability of the wireless communication device, a radio resource control (RRC) signaling, a medium access control control element (MAC CE) signaling, or another DCI.

In some embodiments, a mode of the HARQ-ACK codebook may be configured as "semi-static". In some embodiments, the location of the HARQ-ACK information may be determined according to at least one of: a time offset from a downlink data channel to a corresponding HARQ-ACK, a time domain resource parameter, a subcarrier spacing for downlink, a subcarrier spacing for uplink, or at least one parameter for downlink and uplink patterns. In some embodiments, the time offset may be indicated or selected from a set of time offsets from the downlink data channel to the corresponding HARQ-ACK. In some embodiments, the time offset may be indicated or selected from a set of default time offsets from the downlink data channel to the corresponding HARQ-ACK, if the DCI has DCI format 1_0 or the set of time offsets is not configured. In some embodiments, the time offset may indicate a number of available uplink time units relative to a time unit of the DCI. In some embodiments, the time domain resource parameter may be indicated or selected from a set of time domain resource parameters for a downlink signal. In some embodiments, the procedure may comprise a reference channel determination. In some embodiments, a reference channel may be associated with the time domain resource parameter. In some embodiments, the reference channel may be used for determining the location of the HARQ-ACK information in the HARQ-ACK codebook.

In some embodiments, the reference channel determination may be in a same time unit as the DCI. In some embodiments, a slot offset between the DCI and the reference channel determination, a slot offset between the DCI and the DL channel reception or a slot offset between the DCI and the DL channel release may be zero. In some embodiments, the location of the HARQ-ACK information may be the same as a location of a HARQ-ACK information corresponding to a reference channel or downlink (DL) channel reception determined using the time domain resource parameter. In some embodiments, a mode of the HARQ-ACK codebook may be configured as "dynamic". In some embodiments, the location of the HARQ-ACK information may be determined according to at least one of: a time offset from the DCI or an associated physical downlink control channel (PDCCH), to the HARQ-ACK information, a time offset from the DCI or the associated PDCCH, to a downlink data channel (e.g., PDSCH), a time offset from a downlink data channel (e.g., PDSCH) to the HARQ-ACK information, a PDCCH monitoring occasion, or a downlink assignment index (DAI) parameter.

In some embodiments, the DAI parameter may comprise at least one of a counter DAI and a total DAI. In some embodiments, the DAI parameter may be associated with a control resource set (CORESET) pool identifier (ID) or a set of one or more DCI formats. In some embodiments, the wireless communication device may determine, according to a value of the counter DAI, a counter for bits of the HARQ-ACK information. In some embodiments, the DCI may include the value of the counter DAI. In some embodiments, a value of the counter DAI may be smaller than a value of the total DAI after a last monitored occasion. In some embodiments, the counter for bits of the HARQ-ACK information may have the value of the counter DAI + 1.

In some embodiments, the wireless communication node may transmit radio resource control (RRC) signaling or a medium access control control element (MAC CE) to the wireless communication device. In some embodiments, the RRC signaling or MAC CE signaling may configure or reconfigure one or more parameters corresponding to the DCI. In some embodiments, the one or more parameters may comprise at least one of: a specific radio network temporary identifier (RNTI), a parameter of a starting bit indication, a number of indicated beam states, or a type of HARQ-ACK procedure corresponding to the DCI, comprising semi-static or dynamic. In some embodiments, the one or more parameters may comprise at least one of: support of downlink assignment index (DAI) or total DAI field in a DCI, one or more control resource sets (CORESETs) or search space sets associated with the DCI, a CORESET pool identifier (ID), an ID of the wireless communication device, or an antenna group of the wireless communication device.

In some embodiments, the wireless communication node may send a configuration for the wireless communication device to support a HARQ-ACK procedure for the DCI to the wireless communication device. In some embodiments, the wireless communication node may send the configuration responsive to a sounding reference signal (SRS), a physical uplink control channel (PUCCH) and a physical uplink shared channel (PUSCH) not being configured with spatial relation information. In some embodiments, the wireless communication node may send the configuration responsive to the SRS, the PUSCH and the PUCCH not being configured with an uplink power control parameter. In some embodiments, the wireless communication node may send the configuration responsive to a specific radio resource control (RRC) signaling.

In some embodiments, the SRS, the PUSCH and the PUCCH may not be configured with a parameter of path-loss reference signal (PL-RS). In some embodiments, the SRS associated with the PUSCH may not be configured with the parameter of PL-RS. In some embodiments, the SRS for non-codebook or codebook transmission, may not be configured with the parameter of PL-RS. In some embodiments, a HARQ process number field in the DCI may be set to a specific value. In some embodiments, a redundancy version field in the DCI may be set to a specific value. In some embodiments, a modulation and coding scheme (MCS) field in the DCI may be set to a specific value. In some embodiments, a frequency domain resource assignment field in the DCI may be set to a specific value. In some embodiments, an uplink or downlink shared channel indicator field in the DCI may be set to a specific value. In some embodiments, the uplink or downlink shared channel indicator field may be set to a specific value. In some embodiments, an uplink or downlink shared channel can be precluded from being transmitted.

The systems and methods presented herein include a hybrid automatic repeat request (HARQ) procedure to support the retransmission of DCI. One or more solutions for semi-static HARQ procedures, dynamic HARQ procedures, and/or independent HARQ procedures are discussed herein. The one or more solutions may include multiplexing HARQ-ACK information corresponding to a beam specific DCI command into a normal/nominal HARQ-ACK codebook. At least one flexible method for configuring a group common DCI command, for instance by using a MAC-CE command, is presented.

### BRIEF DESCRIPTION OF THE DRAWINGS

Various example embodiments of the present solution are described in detail below with reference to the following figures or drawings. The drawings are provided for purposes of illustration only and merely depict example embodiments of the present solution to facilitate the reader's understanding of the present solution. Therefore, the drawings should not be considered limiting of the breadth, scope, or applicability of the present solution. It should be noted that for clarity and ease of illustration, these drawings are not necessarily drawn to scale.
FIG. 1 illustrates an example cellular communication network in which techniques disclosed herein may be implemented, in accordance with an embodiment of the present disclosure;
FIG. 2 illustrates a block diagram of an example base station and a user equipment device, in accordance with some embodiments of the present disclosure;
FIG. 3 illustrates example approaches for beam based uplink (UL) and/or downlink (DL) transmissions, in accordance with some embodiments of the present disclosure;
FIG. 4 illustrates example approaches for an independent HARQ-ACK procedure using downlink control information (DCI) with transmission configuration indicator (TCI) indication, in accordance with some embodiments of the present disclosure;
FIG. 5 illustrates example configurations of a DCI format for unified TCI indication in a semi-static HARQ-ACK procedure, in accordance with some embodiments of the present disclosure;
FIG. 6 illustrates example approaches for a semi-static HARQ-ACK procedure corresponding to a DCI with TCI indication, in accordance with some embodiments of the present disclosure;
FIG. 7 illustrates example configurations of a DCI format in a dynamic HARQ-ACK procedure, in accordance with some embodiments of the present disclosure;
FIG. 8 illustrates example approaches for a dynamic HARQ-ACK procedure corresponding to a beam specific DCI with TCI indication, in accordance with some embodiments of the present disclosure;
FIG. 9 illustrates example configurations of a group common DCI command for TCI state indication, in accordance with some embodiments of the present disclosure;
FIG. 10 illustrates example scenarios with one or more groups of one or more wireless communication devices corresponding to a group common DCI, in accordance with some embodiments of the present disclosure; and
FIG. 11 illustrates a flow diagram of an example method for beam indication related DCI retransmission using a HARQ-ACK procedure, in accordance with an embodiment of the present disclosure.

### DETAILED DESCRIPTION

Various example embodiments of the present solution are described below with reference to the accompanying figures to enable a person of ordinary skill in the art to make and use the present solution. As would be apparent to those of ordinary skill in the art, after reading the present disclosure, various changes or modifications to the examples described herein can be made without departing from the scope of the present solution. Thus, the present solution is not limited to the example embodiments and applications described and illustrated herein. Additionally, the specific order or hierarchy of steps in the methods disclosed herein are merely example approaches. Based upon design preferences, the specific order or hierarchy of steps of the disclosed methods or processes can be re-arranged while remaining within the scope of the present solution. Thus, those of ordinary skill in the art will understand that the methods and techniques disclosed herein present various steps or acts in a sample order, and the present solution is not limited to the specific order or hierarchy presented unless expressly stated otherwise.

### 1. Mobile Communication Technology and Environment

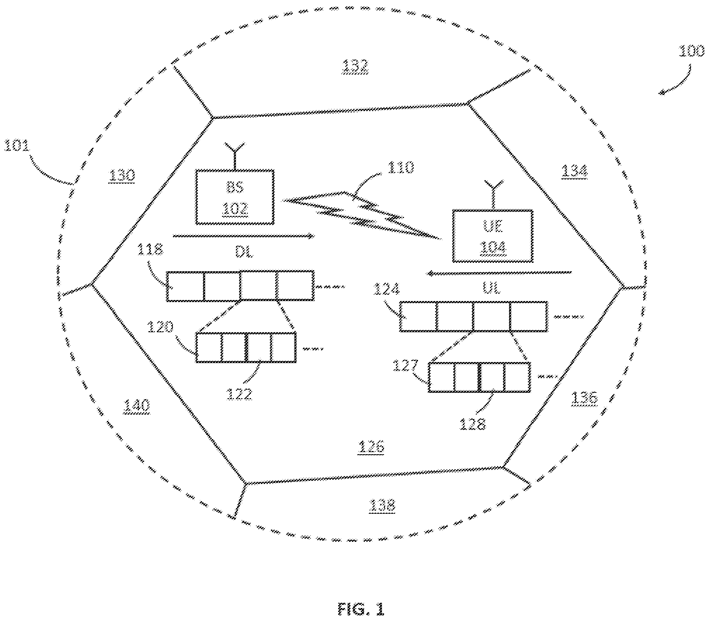

FIG. 1 illustrates an example wireless communication network, and/or system, 100 in which techniques disclosed herein may be implemented, in accordance with an embodiment of the present disclosure. In the following discussion, the wireless communication network 100 may be any wireless network, such as a cellular network or a narrowband Internet of things (NB-IoT) network, and is herein referred to as "network 100." Such an example network 100 includes a base station 102 (hereinafter "BS 102"; also referred to as wireless communication node) and a user equipment device 104 (hereinafter "UE 104"; also referred to as wireless communication device) that can communicate with each other via a communication link 110 (e.g., a wireless communication channel), and a cluster of cells 126, 130, 132, 134, 136, 138 and 140 overlaying a geographical area 101. In Figure 1, the BS 102 and UE 104 are contained within a respective geographic boundary of cell 126. Each of the other cells 130, 132, 134, 136, 138 and 140 may include at least one base station operating at its allocated bandwidth to provide adequate radio coverage to its intended users.

For example, the BS 102 may operate at an allocated channel transmission bandwidth to provide adequate coverage to the UE 104. The BS 102 and the UE 104 may communicate via a downlink radio frame 118, and an uplink radio frame 124 respectively. Each radio frame 118/124 may be further divided into sub-frames 120/127 which may include data symbols 122/128. In the present disclosure, the BS 102 and UE 104 are described herein as non-limiting examples of "communication nodes," generally, which can practice the methods disclosed herein. Such communication nodes may be capable of wireless and/or wired communications, in accordance with various embodiments of the present solution.

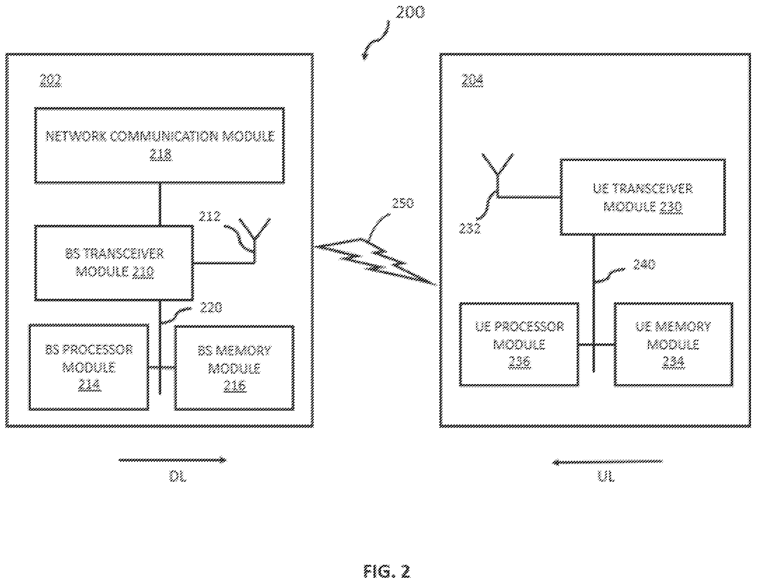

FIG. 2 illustrates a block diagram of an example wireless communication system 200 for transmitting and receiving wireless communication signals (e.g., OFDM/OFDMA signals) in accordance with some embodiments of the present solution. The system 200 may include components and elements configured to support known or conventional operating features that need not be described in detail herein. In one illustrative embodiment, system 200 can be used to communicate (e.g., transmit and receive) data symbols in a wireless communication environment such as the wireless communication environment 100 of Figure 1, as described above.

System 200 generally includes a base station 202 (hereinafter "BS 202") and a user equipment device 204 (hereinafter "UE 204"). The BS 202 includes a BS (base station) transceiver module 210, a BS antenna 212, a BS processor module 214, a BS memory module 216, and a network communication module 218, each module being coupled and interconnected with one another as necessary via a data communication bus 220. The UE 204 includes a UE (user equipment) transceiver module 230, a UE antenna 232, a UE memory module 234, and a UE processor module 236, each module being coupled and interconnected with one another as necessary via a data communication bus 240. The BS 202 communicates with the UE 204 via a communication channel 250, which can be any wireless channel or other medium suitable for transmission of data as described herein.

As would be understood by persons of ordinary skill in the art, system 200 may further include any number of modules other than the modules shown in Figure 2. Those skilled in the art will understand that the various illustrative blocks, modules, circuits, and processing logic described in connection with the embodiments disclosed herein may be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionality. Whether such functionality is implemented as hardware, firmware, or software can depend upon the particular application and design constraints imposed on the overall system. Those familiar with the concepts described herein may implement such functionality in a suitable manner for each particular application, but such implementation decisions should not be interpreted as limiting the scope of the present disclosure

In accordance with some embodiments, the UE transceiver 230 may be referred to herein as an "uplink" transceiver 230 that includes a radio frequency (RF) transmitter and a RF receiver each comprising circuitry that is coupled to the antenna 232. A duplex switch (not shown) may alternatively couple the uplink transmitter or receiver to the uplink antenna in time duplex fashion. Similarly, in accordance with some embodiments, the BS transceiver 210 may be referred to herein as a "downlink" transceiver 210 that includes a RF transmitter and a RF receiver each comprising circuity that is coupled to the antenna 212. A downlink duplex switch may alternatively couple the downlink transmitter or receiver to the downlink antenna 212 in time duplex fashion. The operations of the two transceiver modules 210 and 230 may be coordinated in time such that the uplink receiver circuitry is coupled to the uplink antenna 232 for reception of transmissions over the wireless transmission link 250 at the same time that the downlink transmitter is coupled to the downlink antenna 212. Conversely, the operations of the two transceivers 210 and 230 may be coordinated in time such that the downlink receiver is coupled to the downlink antenna 212 for reception of transmissions over the wireless transmission link 250 at the same time that the uplink transmitter is coupled to the uplink antenna 232. In some embodiments, there is close time synchronization with a minimal guard time between changes in duplex direction.

The UE transceiver 230 and the base station transceiver 210 are configured to communicate via the wireless data communication link 250, and cooperate with a suitably configured RF antenna arrangement 212/232 that can support a particular wireless communication protocol and modulation scheme. In some illustrative embodiments, the UE transceiver 210 and the base station transceiver 210 are configured to support industry standards such as the Long Term Evolution (LTE) and emerging 5G standards, and the like. It is understood, however, that the present disclosure is not necessarily limited in application to a particular standard and associated protocols. Rather, the UE transceiver 230 and the base station transceiver 210 may be configured to support alternate, or additional, wireless data communication protocols, including future standards or variations thereof.

In accordance with various embodiments, the BS 202 may be an evolved node B (eNB), a serving eNB, a target eNB, a femto station, or a pico station, for example. In some embodiments, the UE 204 may be embodied in various types of user devices such as a mobile phone, a smart phone, a personal digital assistant (PDA), tablet, laptop computer, wearable computing device, etc. The processor modules 214 and 236 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, the steps of a method or algorithm described in connection with the embodiments disclosed herein may be embodied directly in hardware, in firmware, in a software module executed by processor modules 214 and 236, respectively, or in any practical combination thereof. The memory modules 216 and 234 may be realized as RAM memory, flash memory, ROM memory, EPROM memory, EEPROM memory, registers, a hard disk, a removable disk, a CD-ROM, or any other form of storage medium known in the art. In this regard, memory modules 216 and 234 may be coupled to the processor modules 210 and 230, respectively, such that the processors modules 210 and 230 can read information from, and write information to, memory modules 216 and 234, respectively. The memory modules 216 and 234 may also be integrated into their respective processor modules 210 and 230. In some embodiments, the memory modules 216 and 234 may each include a cache memory for storing temporary variables or other intermediate information during execution of instructions to be executed by processor modules 210 and 230, respectively. Memory modules 216 and 234 may also each include non-volatile memory for storing instructions to be executed by the processor modules 210 and 230, respectively.

The network communication module 218 generally represents the hardware, software, firmware, processing logic, and/or other components of the base station 202 that enable bidirectional communication between base station transceiver 210 and other network components and communication nodes configured to communication with the base station 202. For example, network communication module 218 may be configured to support internet or WiMAX traffic. In a typical deployment, without limitation, network communication module 218 provides an 802.3 Ethernet interface such that base station transceiver 210 can communicate with a conventional Ethernet based computer network. In this manner, the network communication module 218 may include a physical interface for connection to the computer network (e.g., Mobile Switching Center (MSC)). The terms "configured for," "configured to" and conjugations thereof, as used herein with respect to a specified operation or function, refer to a device, component, circuit, structure, machine, signal, etc., that is physically constructed, programmed, formatted and/or arranged to perform the specified operation or function.

The Open Systems Interconnection (OSI) Model (referred to herein as, "open system interconnection model") is a conceptual and logical layout that defines network communication used by systems (e.g., wireless communication device, wireless communication node) open to interconnection and communication with other systems. The model is broken into seven subcomponents, or layers, each of which represents a conceptual collection of services provided to the layers above and below it. The OSI Model also defines a logical network and effectively describes computer packet transfer by using different layer protocols. The OSI Model may also be referred to as the seven-layer OSI Model or the seven-layer model. In some embodiments, a first layer may be a physical layer. In some embodiments, a second layer may be a Medium Access Control (MAC) layer. In some embodiments, a third layer may be a Radio Link Control (RLC) layer. In some embodiments, a fourth layer may be a Packet Data Convergence Protocol (PDCP) layer. In some embodiments, a fifth layer may be a Radio Resource Control (RRC) layer. In some embodiments, a sixth layer may be a Non Access Stratum (NAS) layer or an Internet Protocol (IP) layer, and the seventh layer being the other layer.

### 2. Systems and Methods for Beam Indication Related DCI Retransmission using a HARQ-ACK Procedure

In certain systems (e.g., 5G new radio (NR) and/or other systems), at least two types of downlink control information (DCI) commands can exist. In some embodiments, a new/novel/updated/unified DCI may be used to broadcast and/or dynamically update a beam (e.g., beam indication). The at least two types of DCI commands may comprise a wireless communication device specific DCI command, a group common DCI command, and/or other DCI commands. The wireless communication device specific DCI command may be used to schedule a physical downlink shared channel (PDSCH) transmission, a physical uplink shared channel (PUSCH) transmission, and/or other transmissions. The group common DCI command may be used to simultaneously configure/control/manage/affect one or more wireless communication devices (e.g., a UE, a terminal, or a served node) as a group. For instance, the group common DCI command may be used for sub-frame indication (SFI), pre-emption indication, transmission power control (TPC) of physical uplink control channel (PUCCH), TPC of physical uplink shared channel (PUSCH), TPC of sounding reference signal (SRS), and/or other processes/applications. The group common DCI command and/or wireless communication device specific DCI command (e.g., without a scheduled PDSCH/PUSCH transmission and/or other transmissions) may save/reduce/decrease signaling overhead and/or latency. However, a lack of support for retransmission (e.g., in case of failed reception) may cause a reduced reliability of the at least two types of DCI commands. In some embodiments, beam specific DCI may be used/implemented in beam indication for a subsequent transmission. Using the beam specific DCI may cause a breakage/interruption/separation of a whole transmission. A misalignment between a beam of a wireless communication node (e.g., a ground terminal, a base station, a gNB, an eNB, or a serving node) and a beam of the wireless communication device may cause a false/missed detection of the beam specific DCI, causing a possible interruption of the whole transmission. Therefore, a lack of retransmission procedures for the DCI may have serious consequences.

In beam indication, analog beam-forming may be used/executed to increase/enhance the robustness of high frequency communications in certain systems (e.g., 5G NR). In some embodiments, a corresponding analog beam-forming indication (e.g., beam indication) may include one or more independent/separate indication procedures/processes for downlink (DL) transmissions and uplink (UL) transmissions.

In some embodiments, a command may be used to improve/enhance the performance of beam indication in UE high mobility scenarios. A command may be used to simultaneously update/upgrade/adjust/modify/change a beam of a DL data/control transmission (e.g., physical downlink control channel (PDCCH), PDSCH, channel state information reference signal (CSI-RS), and/or other signals/channels) and a beam of a UL data/control transmission (e.g., PUCCH, PUSCH, SRS, and/or other channels/signals).

A hybrid automatic repeat request acknowledgement (HARQ-ACK) procedure for beam specific DCI may be used/implemented/designed in a common DL/UL beam indication framework to provide reliability/support for DCI retransmissions. The HARQ-ACK procedure for beam specific DCI (e.g., a wireless communication device specific DCI without scheduling PDSCH and/or for a group common DCI) may support the retransmission of unified beam indication of (multiple) DL/UL data transmissions/receptions and/or DL/UL control transmissions/receptions. The HARQ-ACK procedure for beam specific DCI may face/address one or more of the following issues/challenges:
1) The HARQ-ACK procedure may be divided/categorized/separated into at least two categories. The at least two categories may include a semi-static category, a dynamic category, and/or other categories for HARQ-ACK procedures. The systems and methods presented herein include/provide one or more approaches for carrying/providing/indicating a corresponding HARQ-ACK information bit in the at least two categories.
   - In the semi-static category, the HARQ-ACK codebook determination may be based on a candidate PDSCH reception (e.g., from the perspective of the wireless communication device). However, a PDSCH transmission (or other transmissions) may not be scheduled by the beam specific DCI. Therefore, the systems and methods presented herein may include a novel/new virtual PDSCH reception (or some other reference transmission) corresponding to the beam specific DCI.
   - In the dynamic category, a downlink assignment index (DAI) corresponding to the beam specific DCI may be recommended/used to determine/form a HARQ-ACK codebook. In some embodiments, at least two types of DAI may be used, including a counter DAI and/or a total DAI.
2) In some embodiments, an independent procedure to report/specify/indicate the HARQ-ACK information bit/location (that is part of the codebook) may be used. Other types of procedures can be used to multiplex the HARQ-ACK information corresponding to the beam specific DCI command into a normal HARQ-ACK codebook.
3) In some embodiments, a group common DCI command may be used to achieve/perform beam indication. The group common DCI command may correspond/relate to a group of one or more wireless communication devices. One or more wireless communication devices of the group of wireless communication devices may dynamically join and/or leave the group. For example, a mechanism for dynamic configuration of a wireless communication device (e.g., a UE with parameters corresponding to a group common DCI) may be considered/used.

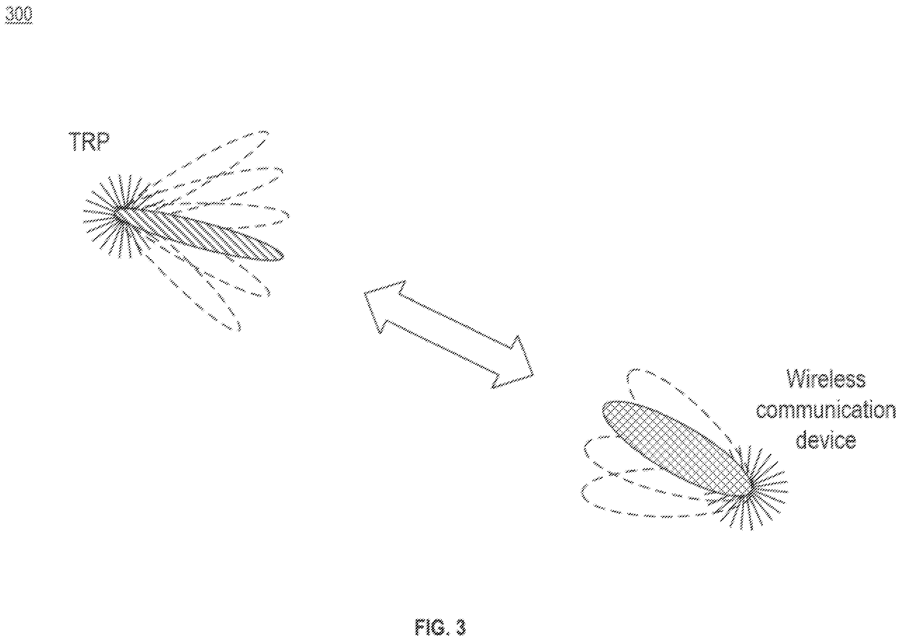

In certain systems, the use of high frequency resources may induce/produce/cause a considerable propagation loss. Therefore, wide and/or ultra-wide spectrum resources may pose/introduce/cause noticeable challenges (e.g., due to propagation loss). Referring now to FIG. 3, depicted is an example approach 300 for beam based UL and/or DL transmissions. Beam 302 and beam 304 of FIG. 3 may indicate/specify/represent a selected/identified transmit (Tx) beam and/or receive (Rx) beam for transmissions. In some embodiments, certain technologies/techniques may achieve/cause beam alignment and/or obtain/cause sufficient antenna gain. For example, antenna arrays and/or beam-forming training techniques that use massive multiple-input multiple-output (MIMO) (e.g., up to 1024 antenna elements for one node) may achieve beam alignment and/or sufficient antenna gain. In some embodiments, analog phase shifters may be used to implement/enable mmWave beam-forming. Using analog phase shifters may result in a low cost of implementation with the benefits of using antenna arrays. If analog phase shifters are used (e.g., to implement mmWave beam-forming), the number of controllable phases may be finite/defined/restricted. In some embodiments, the use of analog phase shifters may place/cause one or more constant modulus constraints on the analog phase shifters. Given a set of one or more pre-specified beam patterns, the goal/target of variable-phase-shift-based beamforming (BF) training may correspond to identifying/determining the optimum beam pattern for subsequent data transmissions. The identified beam pattern may apply to one or more scenarios with one transmit receive point (TRP) and/or one panel (e.g., a UE with one panel).

In some embodiments, a beam state may correspond/refer to a quasi co-location (QCL) state, a transmission configuration indicator (TCI) state, a spatial relation state (or spatial relation information state), a reference signal (RS), a spatial filter, and/or pre-coding. In some embodiments, beam state may correspond to a beam. Specifically:
a) A Tx beam may correspond/refer to a QCL state, a TCI state, a spatial relation state, a DL/UL reference signal (e.g., a CSI-RS, a synchronization signal block (SSB) or SS/PBCH, a demodulation reference signal (DMRS), a sounding reference signal (SRS), a physical random access channel (PRACH), and/or other signals), a Tx spatial filter, and/or Tx precoding.
b) A Rx beam may correspond/refer to a QCL state, a TCI sate, a spatial relation state, a spatial filter, a Rx spatial filter, and/or Rx precoding.
c) A beam identifier (ID) may correspond/refer to a QCL state index, a TCI state index, a spatial relation state index, a reference signal index, a spatial filter index, a precoding index, and/or other indices.

In some embodiments, the spatial filter may correspond to the perspective of the wireless communication device and/or the wireless communication node. In some embodiments, the spatial filter may refer to a spatial-domain filter and/or other filters.

In some embodiments, a spatial relation information may comprise one or more reference RSs. The spatial relation information may be used to specify/indicate/convey/represent a same and/or quasi-co spatial relation between a targeted RS/channel and the one or more reference RSs. In some embodiments, a spatial relation may refer to a beam, a spatial parameter, and/or a spatial domain filter.

In some embodiments, a QCL state may comprise one or more reference RSs and/or one or more corresponding QCL type parameters. The QCL type parameters may include at least one of a Doppler spread, a Doppler shift, a delay spread, an average delay, an average gain, and/or a spatial parameter (e.g., a spatial Rx parameter). In some embodiments, a TCI state may correspond/refer to a QCL state. In some embodiments, a QCL Type D may correspond to a spatial parameter and/or a spatial Rx parameter. In some embodiments, an UL signal may include/comprise a PUCCH, a PUSCH, a SRS, and/or other channels/signals. In some embodiments, a DL signal may include/comprise a PDCCH, a PDSCH, a CSI-RS, and/or other channels/signals.

In some embodiments, a time unit may include a sub-symbol, a symbol, a slot, a sub frame, a frame, a transmission occasion, and/or other time instances. In some embodiments, a power control parameter may include a target power (P0), a path loss RS (e.g., a coupling loss RS), a scaling factor for path loss (e.g., alpha), and/or a closed loop process. In some embodiments, a HARQ-ACK may correspond/refer to a hybrid automatic repeat request (HARQ), an acknowledgement/negative acknowledgement (ACK/NACK), an uplink acknowledgement (UL-ACK), and/or confirmation information for a transmission. In some embodiments, the DCI may correspond/refer to a PDCCH, a TCI indication command, a wireless communication device (e.g., UE) specific DCI, a group common DCI, DCI scheduling PUSCH/PDSCH, and/or DCI without scheduling PUSCH/PDSCH. In the description of the systems and methods presented herein, the term "DCI" may be used to refer to a beam specific DCI and/or a DCI indicating one or more TCI states if there is a lack of a specific/particular description.

In some embodiments, a reference channel determination may correspond/refer to a reference channel release, a reference channel validation, a reference channel reception and/or a reference channel transmission. In some embodiments, a reference channel reception may comprise a reference PDSCH reception and/or a reference PDCCH reception. In some embodiments, a reference channel transmission may comprise a reference PUCCH transmission and/or or a reference PUSCH transmission. In some embodiments, the reference channel may comprise a PDSCH, a PDCCH, a PUCCH, and/or a PUSCH. In some embodiments, the reference channel may correspond/refer to a virtual channel. In some embodiments, release may correspond/refer to deactivation. In some embodiments, validation may correspond/refer to activation and/or assignment.

In some embodiments, the definition of an antenna group may correspond to the perspective of the wireless communication device. In some embodiments, an antenna group may correspond to an antenna port group, panel, and/or wireless communication device (e.g., UE) panel.

In some embodiments, a downlink data channel may correspond/refer to a PDSCH and/or a downlink shared channel (DL-SCH).

### A. Embodiment 1: General Description of HARQ-ACK Procedures for Beam Specific DCI

In some embodiments, an UL resource (e.g., a PUCCH resource and/or other resources) may carry/include/provide/specify/indicate the HARQ-ACK information. The HARQ-ACK information may be included/specified/located at a corresponding location in the HARQ-ACK codebook and/or used for ACK/NACK determination. A DCI command with TCI indication may be used to specify/indicate/provide/identify at least one UL resource. In some embodiments, the DCI command may be used to update/modify/adjust at least one UL and/or DL beam. A report of HARQ-ACK information (or other information) may be used to determine/configure an applicable timing for updating/scheduling the at least one UL/DL beam.

In some embodiments, the DCI can be associated/related/linked with a PUCCH resource (and/or other resources). The PUCCH resource may carry/include/provide/specify the HARQ-ACK information.
- Higher layer signaling/commands, such as radio resource control (RRC) signaling and/or medium access control control element (MAC-CE) signaling, may be used configure/determine/indicate the PUCCH resource(s) of the DCI.
- In some embodiments, the DCI transmission may carry/include/specify/provide a PUCCH resource indicator (PRI) and/or other indicators. The PRI (or other indicators) may indicate/specify/identify the PUCCH resource(s).
- In some embodiments, the PUCCH resource(s) may be determined according to a set of PUCCH resources for O_{UCI} HARQ-ACK information bits (e.g., number of HARQ-ACK information bits). Furthermore, the PUCCH resource(s) may be determined according to at least one PRI. As an example, a last DCI of one or more DCIs corresponding to a same slot (or other time instances) for a PUCCH transmission may include/carry/specify the PRI.
   ∘ A parameter may be used to determine/configure a time offset between a PUCCH transmission and the DCI. The parameter may be configured/determined according to a capability of the wireless communication device, a predefined/predetermined configuration, the RRC signaling, the MAC-CE signaling, another DCI, and/or other configurations/signaling/information.
      ▪ In some embodiments, the parameter may indicate/specify/provide an offset or a number/amount of available UL slots (or other time instances) from the time unit/location of the DCI transmission (e.g., relative to a location of the DCI transmission).
         - For example, a slot sequence may comprise at least five slots (e.g., slot D#0, slot D#1, slot D#2, slot U#3, and/or slot D#4). In some embodiments, DCI may be received/obtained in a first slot of the slot sequence (e.g., slot D#0). The parameter to determine a time offset (e.g., to determine a number of available UL slots) may correspond/refer to one slot. If a first available UL slot corresponds to a fourth slot (or other slots) of the slot sequence (e.g., U#3), the fourth slot may carry/include/provide the HARQ-ACK information.
      ▪ In some embodiments, the PUCCH transmission in a first UL time unit after a time instance/unit of a DCI transmission, may carry/include/provide/specify the HARQ-ACK information.

In some embodiments, a location of the HARQ-ACK information in the HARQ codebook may correspond to a first bit, a last bit, and/or a predefined bit of the HARQ-ACK codebook. In some embodiments, the HARQ-ACK information bit for the DCI can be located prior/before or after/following a HARQ-ACK codebook for an associated/related PDSCH reception and/or release. Of the embodiments discussed herein, Embodiment 2 may include/provide/specify one or more procedures/systems/operations to determine the location of the HARQ-ACK information (e.g., corresponding to the DCI) in the HARQ-ACK codebook in a semi-static procedure. Embodiment 3 may include one or more procedures/systems/operations to determine the location of the HARQ-ACK information (e.g., corresponding to the DCI) in the HARQ-ACK codebook in a dynamic procedure.

In some embodiments, the wireless communication device may fail to detect/identify the DCI. Responsive to failing to detect the DCI, the wireless communication device may generate/create a non-acknowledgement (NACK) value for the HARQ-ACK information. The NACK value may be scheduled/positioned at a location relative to a transport block, a virtual PDSCH, one or more code block groups (CBGs), and/or other applications. In some embodiments, a HARQ-ACK information bit may correspond to a PDSCH reception (e.g., successful PDSCH reception and/or unsuccessful PDSCH reception). The PDSCH may include a transport block of the PDSCH and/or a CBG of the PDSCH. The transport block may comprise one or more CBGs.
- In some embodiments, the wireless communication device may receive/obtain one or more candidate PDSCHs. If the wireless communication device (successfully) receives one or more candidate PDSCHs or virtual PDSCH(s) (corresponding to the DCI beam state information), the wireless communication device may ignore/disregard/neglect the NACK value.

In some embodiments, the wireless communication device may detect/identify the DCI via one or more PDSCH receptions. Responsive to detecting the DCI, the wireless communication device may generate/create an acknowledgement (ACK) value for the HARQ-ACK information. The ACK value may be scheduled/positioned at a location relative to a transport block, a virtual PDSCH, one or more code block group (CBGs), and/or other applications. In some embodiments, the DCI may be used to indicate/specify at least one TCI state (e.g., beam indication). The TCI state(s) can be applied to a DL and/or UL signal at a time location (e.g., time slot and/or other time instances) that is Q time units after transmitting the HARQ-ACK information. In some embodiments, the TCI state(s) can be applied to a DL and/or UL signal at a time location corresponding to a time slot (or other time instances) after a time instance corresponding to the HARQ-ACK transmission plus (+) Q time units.
- The value of Q may be determined/configured according to a capability of the wireless communication device, a predefined configuration, the RRC signaling, the MAC-CE signaling, another DCI transmission, and/or other configurations/signaling/information.

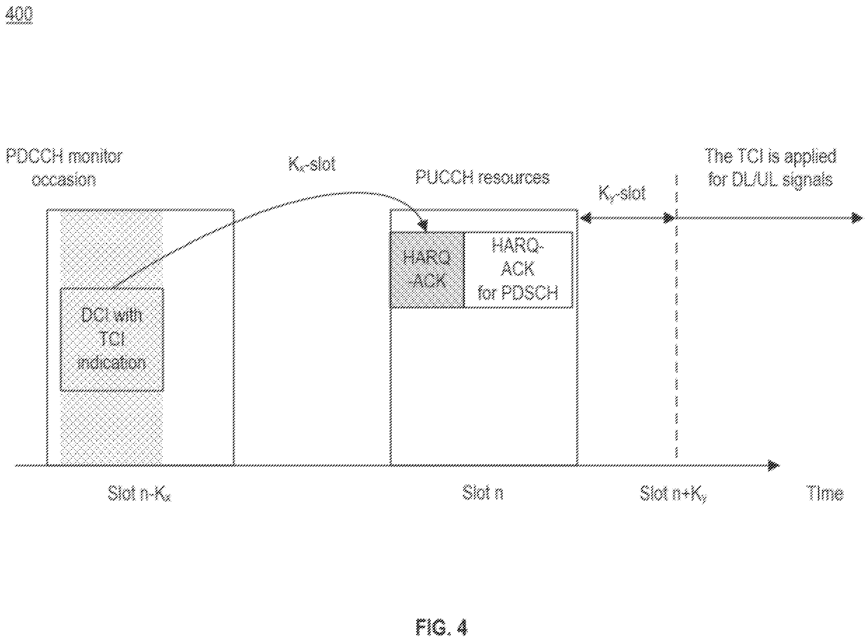

Referring now to FIG. 4, depicted is an example approach 400 for an independent HARQ-ACK procedure using DCI with TCI indication. In slot n-Kₓ (or other time instances), the wireless communication device may receive/obtain a DCI that indicates/specifies a TCI. The TCI may be used to update/regenerate at least one beam of one or more DL/UL signals. The corresponding HARQ-ACK information bit may be reported/specified/indicated in slot n (or other time instances). The value of Kₓ may be configured/determined according to a RRC parameter (or other parameters). In some embodiments, Kₓ may have a value corresponding to the Kₓ^{th} available UL slot (or other time instances). The indicated TCI may be applied to DL and/or UL signals, wherein the indicated TCI is applied/used K_{y} slots following the transmission of the HARQ-ACK information. The HARQ-ACK information of the DCI command may be added/appended prior to / before a normal/nominal HARQ-ACK for a PDSCH (or other signals). In some embodiments, the wireless communication node (e.g., gNB) may be unable to receive/obtain the PUCCH, and/or the value of HARQ-ACK information may correspond to NACK. If the wireless communication node fails to receive the PUCCH and/or the HARQ-ACK information has a value of NACK, the wireless communication node may resend/retransmit the DCI using a time instance (e.g., a time slot) before/prior to slot n+K_{y}. In some embodiments, the wireless communication node may attempt to use an old/stale and/or an updated DL Tx beam to retransmit/resend the DCI.

In some embodiments, the DCI may correspond to a DCI used for scheduling a PDSCH (e.g., DCI format 1_0, DCI format 1_1, and/or DCI format 1_2) and/or a DCI used for scheduling a PUSCH (e.g., DCI format 0_0, DCI format 0_1, and/or DCI format 0_2). In some embodiments, a HARQ process number field of the DCI can be set to a specific value and/or a redundancy version (RV) field of the DCI may be set to a specific value. In some embodiments, a modulation and coding scheme (MCS) field of the DCI may be set to a specific value and/or a frequency domain resource assignment field of the DCI can set to a specific value. In some embodiments, an uplink and/or downlink shared channel indicator field of the DCI may be set to a specific value. Furthermore, the specific value may include or correspond to the values of "0", "1", all "0", all "1", and/or other values. Furthermore, if the uplink/downlink shared channel indicator field is set to a specific value, the uplink/downlink shared channel may be precluded from transmission and/or reception, and/or the DCI may not schedule the uplink/downlink shared channel..

### B. Embodiment 2: Semi-static Procedures for Reporting a HARQ-ACK Information Bit

The location of the HARQ-ACK information in a HARQ-ACK codebook may be determined/calculated in semi-static procedures (e.g., a mode of the HARQ-ACK codebook is configured as "semi-static"). In some embodiments, the HARQ-ACK information may correspond to a DCI that indicates/specifies/identifies one or more TCI states. The DCI may be associated/related/linked with at least one parameter. The location of the HARQ-ACK information/bit (in a HARQ-ACK codebook) may be determined according to the at least one parameter. The at least one parameter may include at least one of the following parameters:
- The at least one parameter may include a time offset (e.g., slot offset or other offsets). The time offset may correspond/refer to a time offset from a DL data channel to a corresponding HARQ-ACK (e.g., PDSCH-to-HARQ feedback timing). The time offset may be carried/included/specified by the DCI and/or configured/determined by a MAC-CE command, a RRC command, and/or other commands.
   ∘ A set of time offsets may include/indicate/specify the time offset. The set of time offsets may comprise one or more time offsets. The set of time offsets may correspond/refer to a set of time offsets from a DL data channel to a corresponding HARQ-ACK (e.g., dl-DataToUL-ACK).
   ∘ A set of default time offsets may include the time offset. The set of default time offsets may comprise one or more default time offsets. The set of default time offsets may correspond/refer to a set of default time offsets from a DL data channel to a corresponding HARQ-ACK (e.g., {1, 2, 3, 4, 5, 6, 7, 8}). In some embodiments, a monitored DCI format may correspond to DCI format 1_0 (or other DCI formats). In some embodiments, the set of time offsets from the DL data channel to the corresponding HARQ-ACK may not be configured. If the DCI format is not DCI format 1_0 and/or the set of time offsets are not configured, the set of default time offsets may provide/include/specify the time offset.
   ∘ In some embodiments, the time offset may indicate/provide/specify a number/amount of available UL slots (or other time instances) relative to a location (e.g.., a time unit) of the DCI.
- The at least one parameter may include a time domain resource parameter (or other parameters) for a DL signal (or other signals). In some embodiments, DCI (or other information) may carry/include/provide/specify the time domain resource parameter. Higher layer signaling (e.g., MAC-CE signaling, RRC signaling, and/or other types of signaling) may be used to determine/configure the time domain resource parameter.
   ∘ A set of time domain resource parameters for a DL signal (e.g., PDSCH and/or other signals) may include/indicate/specify/carry the time domain resource parameter. For example, the time domain resource parameters may include or correspond to *PDSCH-TimeDomainResourceAllocationList.*
   ∘ In some embodiments, a reception of a virtual PDSCH (or other DL signals/channels or reference channel/transmission) can be associated/related to the time domain resource parameter and/or a same slot (or other time instance) as the DCI. The virtual PDSCH may be utilized to determine the location of the HARQ-ACK information in the HARQ-ACK codebook.
- The at least one parameter may include a subcarrier spacing for DL and/or a subcarrier spacing for UL.
- The at least one parameter may include one or more parameters for DL and/or UL patterns (e.g., *TDD-UL-DL-ConfigurationCommon, TDD-UL-DL-ConfigDedicated,* and/or other parameters for DL/UL patterns).

In some embodiments, a slot (or other time duration/unit) offset between the DCI and the time domain resource (e.g., associated with the time domain resource parameter) may have a value of zero (or other values). In some embodiments, a slot offset between the DCI and a DL channel reception/release may have a value of zero (or other values) In some embodiments, the reception of the virtual PDSCH can be associated/related/linked with the same slot (or other time instances) as the DCI. In some embodiments, the location of the HARQ-ACK information in the HARQ-ACK codebook may correspond to the location of a corresponding DL signal reception (e.g., PDSCH reception and/or other DL signal receptions) determined by the time domain resource parameter (or other parameters).

In one example, a semi-static procedure may include HARQ-ACK information corresponding to a DCI that indicates/specifies/identifies one or more TCI states. In the semi-static procedure, the wireless communication device may be configured with a PUCCH resource ID, and/or PUCCH resource indication. The wireless communication device may be configured with a time offset corresponding to a time offset from DL-data (e.g., DL data channel) to UL-ACK. The wireless communication device may select/determine/identify the time offset using the RRC parameter *PDSCH-TimeDomainResourceAllocationList* (or other parameters).

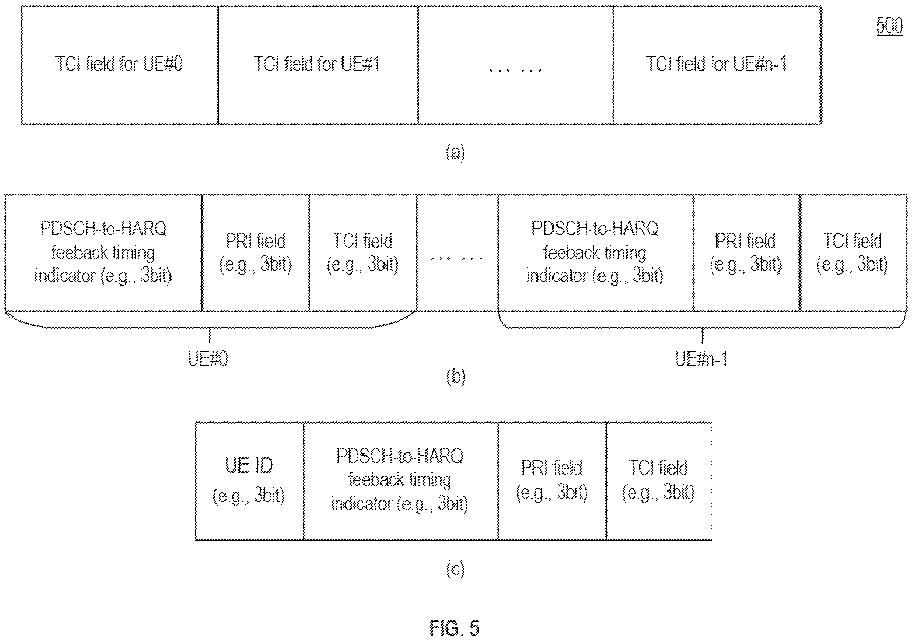

Referring now to FIG. 5, depicted are example configurations 500 of a DCI format for unified TCI indication in a semi-static HARQ-ACK procedure. In the example configuration (a), the DCI may include/comprise one or more TCI fields. Each TCI field of the one or more TCI fields may correspond to at least one wireless communication device (e.g., a type of group common DCI). For example, a first TCI field may correspond to UE#0, while a second TCI field may correspond to UE#n-1. In some embodiments, a time offset from DL-data to HARQ-ACK (e.g., PDSCH-to-HARQ feedback timing), a PUCCH resource, a radio network temporary identifier (RNTI), and/or a starting bit may be configured/determined by RRC signaling, MAC-CE signaling, and/or other types of signaling.

In the example configuration (b), the DCI may include/comprise one or more groups (e.g., a type of group common DCI). Each group of the one or more groups may correspond to at least one wireless communication device (e.g., UE). In some embodiments, each group of the one or more groups may include/indicate/carry a PDSCH-to-HARQ feedback timing indicator, a PRI, a TCI field, and/or other indicators/fields. For example, a first group comprising a PDSCH-to-HARQ feedback timing indicator, a PRI field, and/or a TCI field may correspond to a first wireless communication device (e.g., UE#0 and/or other UEs). In some embodiments, the PUCCH resource associated/related with the HARQ-ACK may be determined according to the PRI (e.g., the PRI of the DCI). Higher layer signaling (e.g., RRC signaling, MAC-CE signaling, and/or other types of signaling) may configure/determine the RNTI and/or the starting bit.

In the example configuration (c), the DCI may include a wireless communication device ID (or UE ID) field, a PDSCH-to-HARQ feedback timing indicator, a PRI, at least one TCI field, and/or other fields/indicators (e.g., a wireless communication device specific DCI without PDSCH scheduling). The UE ID may be configured/determined using an RRC command, a MAC-CE command, and/or other commands/signaling. The UE ID field can indicate/specify/identify at least one wireless communication device of a group of one or more wireless communication devices. The wireless communication devices of the group may have the same field for the DCI format and/or RNTI.

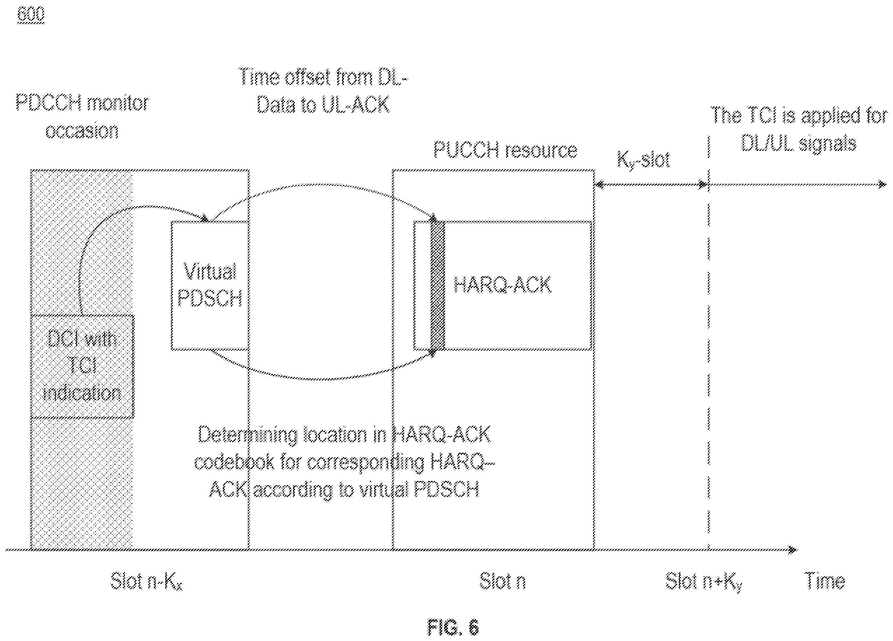

Referring now to FIG. 6, depicted is an example approach 600 for a semi-static HARQ-ACK procedure corresponding to a DCI with TCI indication. In some embodiments, the location of the HARQ-ACK information in the HARQ-ACK codebook may be the same location of a corresponding DL signal reception (e.g., PDSCH reception) determined using the time domain resource parameter. In one example, the wireless communication device may receive/obtain the DCI in slot n-Kₓ (or other time instances). The DCI may indicate a TCI for updating at least one beam of one or more UL/DL signals. The corresponding PDSCH reception (e.g., virtual PDSCH or other reference channel reception/determination) can be determined according to the time domain resource parameter (or other parameters) for PDSCH (e.g., time domain resource allocation indication and/or time domain resource assignment (TDRA) field). The HARQ-ACK information bit/location corresponding to the DCI (and/or other information) may be reported/indicated/specified in slot n (or other time instances). The time offset from DL-Data to UL-ACK (e.g., 3 slots and/or other time instances) may be configured by a RRC parameter (or other parameters). The location of the corresponding HARQ-ACK information in the HARQ-ACK codebook may be determined based on the reception of the virtual PDSCH (or other channels/signals). Therefore, the HARQ-ACK information corresponding to the DCI may be multiplexed with other HARQ-ACK information for the reception of the PDSCH. In some embodiments, the indicated TCI may be applied to one or more UL and/or DL signals K_{y} slots (or other time instances) after the transmission of the HARQ-ACK information.

### C. Embodiment 3: Dynamic Procedures for Reporting a HARQ-ACK Information Bit

The location of the HARQ-ACK information in a HARQ-ACK codebook may be determined/calculated in dynamic procedures (e.g., a mode of the HARQ-ACK codebook is configured as "dynamic"). In some embodiments, the HARQ-ACK information may correspond to a DCI (or other information). The DCI may be associated/related/linked with at least one parameter. The location (e.g., bit location) of the HARQ-ACK information may be determined according to the at least one parameter. The at least one parameter may include/specify a time offset (or other offsets) from the DCI command and/or an associated PDCCH to the HARQ-ACK information. The at least one parameter may include/indicate a time offset from the DCI command and/or an associated PDCCH to a PDSCH. The at least one parameter may include/indicate a time offset from a PDSCH to the HARQ-ACK information. In some embodiments, one or more of the time offsets can be used to determine/configure the time unit of the HARQ-ACK information transmission.

In some embodiments, the at least one parameter may include a PDCCH (or other channels/signals) monitoring occasion and/or a DAI parameter. The DAI parameter may comprise at least one of a counter DAI and/or a total DAI. The counter/total DAI can be used to check/verify/validate/verify a missed detection of DCI in a PDCCH monitoring occasion.
- For determining the HARQ-ACK codebook, the DAI parameter may be associated/related/linked with a same control resource set (CORESET) pool ID and/or a same set of one or more DCI formats.
   ∘ In some embodiments, a counter for bits of HARQ-ACK information and/or the counter DAI can be format specific. One or more distinct/different sets of DCI format may correspond to different HARQ-ACK codebook determinations. For example, a first set may include DCI format 1_0, DCI format 1_1, and/or DCI format 1_2. Another set may comprise the DCI format indicating one or more TCI states.
- The counter DAI may indicate/specify the cumulative number of {serving cell, PDCCH} pairs up to a current serving cell and/or a current monitoring occasion. The counter DAI may be indexed/ordered in ascending order (or other order) across serving cell indices for a same PDCCH monitoring occasion. The counter DAI may be indexed/ordered in ascending order (or other order) across PDCCH monitoring occasion indices.
   ∘ In some embodiments, the PDCCH monitoring occasion may be ordered/categorized in ascending order (or other order) of start time of a search space set. The search space set may be associated/related/linked with the PDCCH monitoring occasion.
- The total DAI may indicate/provide/specify a total number of {serving cell, PDCCH} pairs up to the current monitoring occasion. The total DAI may be updated/modified/adjusted from a PDCCH monitoring occasion to another PDCCH monitoring occasion.
   ∘ In some embodiments, the total DAI of the DCI(s) in the PDCCH monitoring occasion can be the same.

In some embodiments, the DCI may carry/include/specify/indicate the value of the counter DAI. A counter for bits of the HARQ-ACK information can be determined/configured according to a value of the counter DAI. For example, the DCI may include the counter DAI field and/or exclude the total DAI to reduce/save DCI signaling overhead by at least 25% (e.g., 35, 45, 55, or other percent). In some embodiments, the value of the counter DAI may be less/smaller than the value of the total DAI following/after a last/recent monitored occasion. Therefore, the value of the counter for bits of the HARQ-ACK information may correspond to the value of the counter DAI plus 1 (e.g., value of the counter DAI+1 and/or other values). In some embodiments, the bit of HARQ-ACK information can be added/appended prior to or after the HARQ-ACK codebook for PDSCH.

In some embodiments, the wireless communication device (e.g., UE) may be configured to receive/obtain the DCI in a slot n-K (or other time instances). The parameter K may correspond to the value of the time offset parameter (e.g., time offset parameter from PDSCH to HARQ feedback). In some embodiments, a total number of bits of the HARQ-ACK information may correspond to the total number of HARQ-ACK information bits plus 1 (or other values). In some embodiments, a corresponding information bit can be determined/configured according to the HARQ-ACK information bit(s) associated with the DCI. The total number of bits of the HARQ-ACK information can be used as a variable/value to count the HARQ-ACK information. One or more bits added/appended to the HARQ-ACK information (e.g., the corresponding information bit(s)) may carry/include/specify the HARQ information associated with the DCI. In some embodiments, at least one bit of the HARQ-ACK information corresponding to the DCI may be multiplexed with one or more bits of the HARQ-ACK information, wherein the one or more bits of the HARQ-ACK information can be transmitted with a same PUCCH/PUSCH and/or a same time unit.

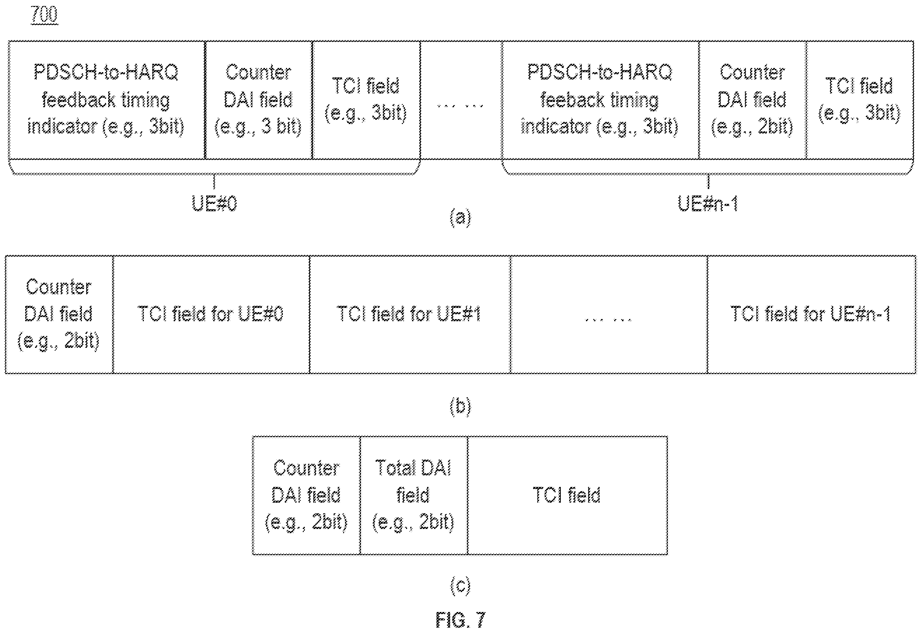

Referring now to FIG. 7, depicted are example configurations 700 of a DCI format in a dynamic HARQ-ACK procedure. In the example configuration (a), the DCI may include/comprise one or more groups (e.g., a type of group common DCI). Each group of the one or more groups may correspond to at least one wireless communication device. Each group may include/provide/specify a PDSCH-to-HARQ feedback timing indicator (e.g., offset indicator), a counter DAI field, a TCI field, and/or other indicators/fields/information. For example, a first group comprising a PDSCH-to-HARQ feedback timing indicator, a counter DAI field, and/or a TCI field may correspond to a first wireless communication device (e.g., UE#0 and/or other UEs). Higher layer signaling/commands (e.g., RRC, MAC-CE, and/or other types of signaling/commands can be used to configure a PUCCH resource, a RNTI, a starting bit for a wireless communication device, and/or other information.

In the example configuration (b), the DCI may include at least one counter DAI field, one or more TCI fields, and/or other fields. Each TCI field of the one or more TCI fields may correspond to at least one wireless communication device (e.g., a type of group common DCI). For example, a first TCI field may be associated with UE#0 (or other wireless communication devices), while a second TCI field may be associated with UE#1 (or other wireless communication devices). In some embodiments, one or more wireless communication devices (e.g., all wireless communication devices) may share a same value of the counter DAI field. A counter DAI for determining the HARQ-ACK codebook can be associated/related with a same DCI format. In the example configuration (c), the DCI may include at least one counter DAI field, at least one total DAI field, at last one TCI field, and/or other fields. At least one field of the fields of the DCI may correspond to at least one wireless communication device (e.g., a type of wireless communication device specific DCI without PDSCH scheduling).

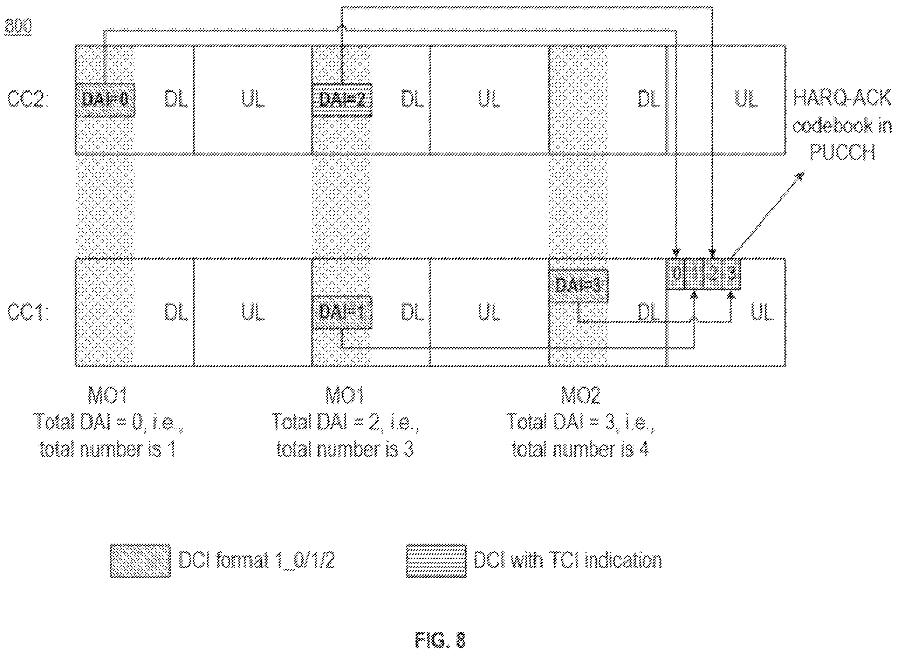

Referring now to FIG. 8, depicted is an example approach 800 for a dynamic HARQ-ACK procedure corresponding to a beam specific DCI with TCI indication. In some embodiments, the HARQ-ACK information may correspond to a DCI that indicates one or more TCI states (e.g., beam specific DCI with TCI indication). The HARQ-ACK codebook (or location) for the HARQ-ACK information and/or a DCI for scheduling at least one PDSCH (or other channels/signals) may be determined/configured according to a counter DAI field. Certain DCI formats (e.g., DCI format 1_1 and/or DCI format 1_2) can provide/indicate/specify the total DAI value. The total DAI may be specific/distinct/particular to a monitored occasion (MO). For example, one or more DCIs may share a same total DAI in a MO.

### D. Embodiment 4: Flexible Methods for Configuring a Group-Common DCI Command

In some embodiments, one or more wireless communication devices may have one or more same/similar channel properties. For example, one or more wireless communication devices in a high-speed train (or other environments/locations) may have similar channel properties. If one or more wireless communication devices have same/similar properties, a group common DCI command (or other commands) can be used to indicate/specify/provide one or more TCI states (e.g., TCI indication). Using a group common DCI command to indicate one or more TCI states may save/reduce/decrease signaling overhead and/or latency by for instance at least 25% (e.g., 35, 45, 55, or other percent).

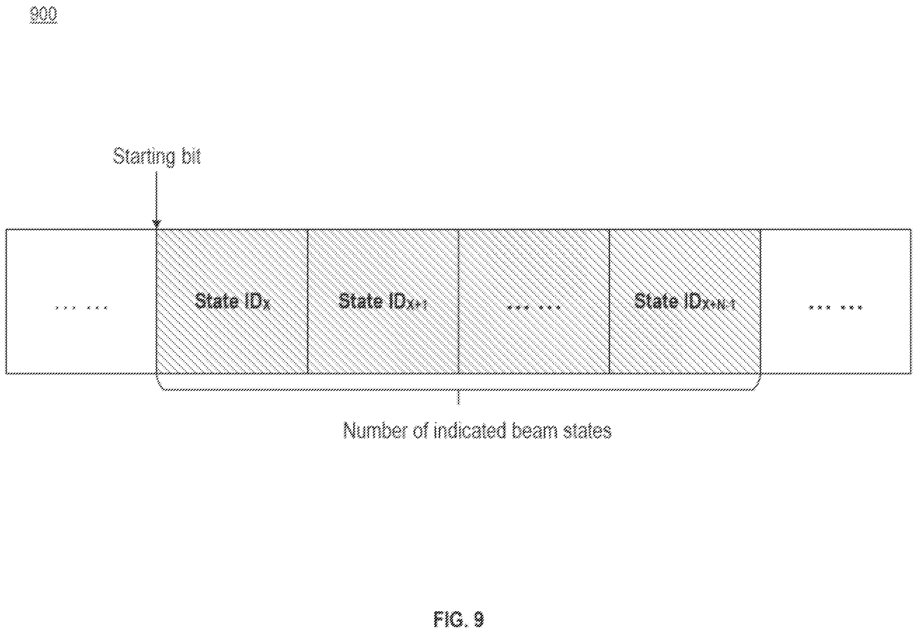

Referring now to FIG. 9, depicted is an example configuration 900 of a group common DCI command for TCI state indication. In some embodiments, a wireless communication device may configure a RNTI (or other indicators). The RNTI may be used to scramble the group common DCI command. For example, a cyclic redundancy check (CRC) may be used to scramble the DCI format with the RNTI. A parameter corresponding to a starting bit command and/or a number of indicated beam states may be used/configured to determine a field of the group common DCI. The field of the group common DCI may correspond to the field carrying/providing/specifying one or more indicated beam states. The one or more beam states can be obtained from a starting position of the DCI, which is determined by the starting bit.

In some embodiments, MAC-CE signaling (or other types of signaling, such as RRC signaling) can be used to configure/reconfigure one or more parameters corresponding to a DCI (e.g., group common DCI command). The one or more parameters may be configured/reconfigured (e.g., using MAC-CE signaling) to support one or more methods of configuring PDCCH resources for monitoring a group common DCI command. The one or more parameters may include a specific RNTI, a parameter of a starting bit command, a number of indicated beam states, a type of HARQ-ACK procedure corresponding to the DCI (e.g., semi-static and/or dynamic), support of DAI/total DAI, one or more CORESETs associated with the DCI, one or more search space sets associated with the DCI, a CORESET pool ID, an ID of the wireless communication device, a panel of the wireless communication device, and/or an antenna group of the wireless communication device.

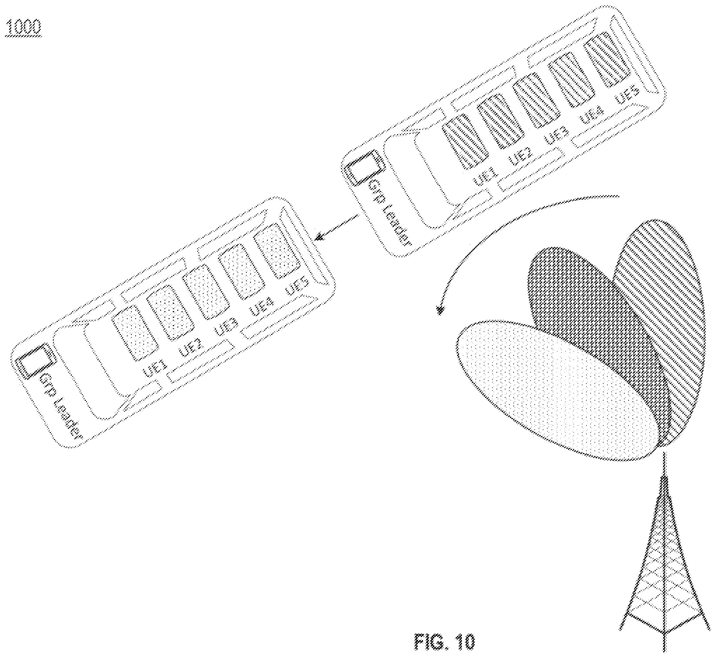

Referring now to FIG. 10, depicted is an example scenario 1000 with one or more groups of one or more wireless communication devices corresponding to a group common DCI. For example, a scenario with one or more groups of wireless communication devices corresponding to a group common DCI can be relevant/applicable to an example embodiment with one or more wireless communication devices (e.g., UE1, UE2, UE3, UE4, and/or UE5) in a vehicle (e.g., a bus and/or other vehicles). The wireless communication node (e.g., gNB) may group/classify/arrange one or more wireless communication devices of a bus in a same group with a similar beam switching behavior. The group common DCI of each wireless communication device of a bus can be associated with certain resources according to a MAC-CE command (or other commands). The wireless communication node may attempt to update/modify/adjust/change the beam(s) of the wireless communication devices of a vehicle (or other groups) jointly/together at a same time instance. For example, at a same time instance, a beam corresponding to {UE3, UE4, UE5} may be updated/modified/changed from a first beam to a second beam. However, a beam corresponding to {UE1, UE2} may remain as the second beam. If a wireless communication device leaves the bus (or other vehicles), the wireless communication node may regroup/rearrange the wireless communication device with other wireless communication devices (e.g., pedestrians and/or other wireless communication devices). The wireless communication node may regroup the wireless communication device via a MAC-CE command (or other commands/signaling).

### E. Embodiment 5: Signaling Capability of a Wireless Communication Device and Methods of Enabling the HARQ-ACK Procedure

In some embodiments, a wireless communication device may report/indicate/specify/provide the capability signaling of the wireless communication device to support the HARQ-ACK procedure for beam specific DCI. The wireless communication device may report the capability signaling to support the beam specific DCI (e.g., HARQ-ACK procedure corresponding to the DCI may be supported by default) after accessing the wireless communication network. The wireless communication network may use a RRC configuration (or other configurations) to enable/implement one or more functions (e.g., reporting the capability of the wireless communication device).

From the perspective of the wireless communication node (e.g., gNB), one or more of the following aspects/options/scenarios may enable/trigger the HARQ-ACK procedure for the DCI:
- Option/case 0: A SRS, a PUSCH, and/or a PUCCH may not be configured with spatial relation information.
- Option/case 1: A SRS, a PUSCH, and/or a PUCCH may not be configured with an UL power control parameter (or other parameters).
   ∘ In some embodiments, the SRS, the PUSCH, and/or the PUCCH may not be configured with a parameter of path-loss reference signal (PL-RS) and/or other parameters.
   ∘ In some embodiments, the SRS associated/related with the PUSCH may not be configured with the parameter of PL-RS (and/or other parameters).
   ∘ In some embodiments, the SRS for non-codebook and/or codebook transmissions may not be configured with the parameter of PL-RS (and/or other parameters).
- Option/case 3: A novel/new RRC signaling (or other types of signaling) may be used to enable/trigger the one or more functions.
   ∘ In some embodiments, one or more higher layer parameters, such as *enableBeamSpecificDCI* and/or *enableHARQ-ACKforBeamSpecificDCI,* may be enabled.

### F. Methods for Beam Indication Related DCI Retransmission using a HARQ-ACK Procedure

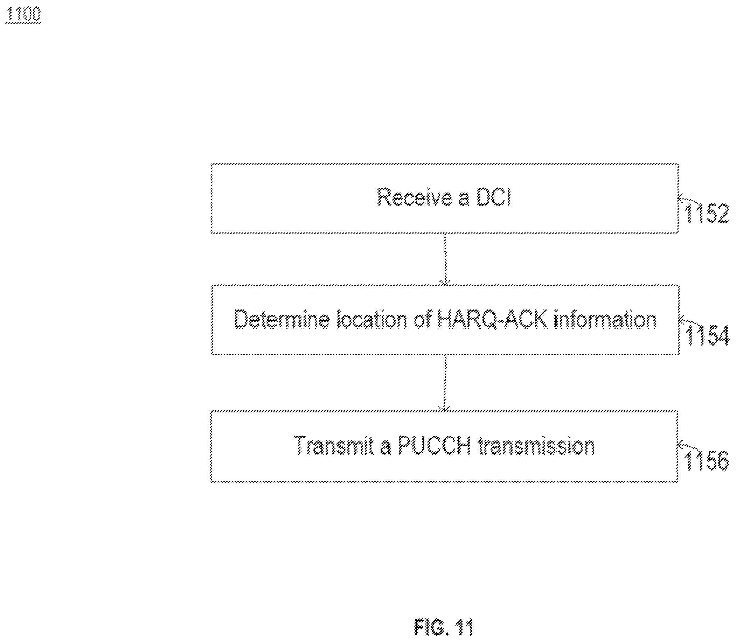

FIG. 11 illustrates a flow diagram of a method 1100 for beam indication related DCI retransmission using a HARQ-ACK procedure. The method 1100 may be implemented using any of the components and devices detailed herein in conjunction with FIGs. 1-10. In overview, the method 1100 may include receiving a DCI (1152). The method 1100 may include determining a location of HARQ-ACK information (1154). The method 1100 may include transmitting a PUCCH transmission (1156).

Referring now to operation (1152), and in some embodiments, a wireless communication device (e.g., a UE) may receive/obtain a DCI from a wireless communication node (e.g., a BS/gNB). The wireless communication node may send/transmit/broadcast the DCI to the wireless communication device. The wireless communication device may receive/obtain the DCI via MAC-CE signaling, RRC signaling, and/or other types of signaling/commands. In some embodiments, the wireless communication device may generate/configure/create a NACK value for the HARQ-ACK information. The wireless communication device may generate the NACK value responsive to a failure to (successfully) detect/identify/receive a DCI (or other information). In some embodiments, the wireless communication device may generate an ACK value for the HARQ-ACK information. The wireless communication device may generate the ACK value responsive to a successful detection/identification/reception of the DCI (or other information). The wireless communication device may detect/identify/receive the DCI via at least one PDCCH reception of one or more PDCCH receptions.

Referring now to operation (1154), and in some embodiments, the wireless communication device may determine/configure a location/position/placement of HARQ-ACK information for a procedure associated with the DCI (or other information). The wireless communication device may determine the location of HARQ-ACK information in a HARQ-ACK codebook. In some embodiments, the wireless communication device may determine a first PUCCH (or other channels) resource. In some embodiments, the location (e.g. bit location) of the HARQ-ACK information in the HARQ-ACK codebook may correspond/refer to a first bit, a last bit, a predefined bit of the HARQ-ACK codebook, and/or other locations. In some embodiments, the HARQ-ACK information can be located prior to or after a HARQ-ACK codebook. The HARQ-ACK codebook may refer/correspond to a HARQ-ACK codebook for an associated/related/corresponding PDSCH reception, PDSCH release, and/or other channel receptions/releases. In some embodiments, the procedure (e.g., HARQ-ACK procedure for beam specific DCI and/or other procedures) may comprise a reference channel determination (e.g., virtual PDSCH), a DL channel reception, a DCI reception, a PDCCH reception, and/or other channel/signal/information receptions. In some embodiments, the procedure may comprise a DL channel release and/or beam state indication.

In some embodiments, one or more types of higher layer signaling/commands may be used to configure/determine the first PUCCH resource (or other resources) for the procedure. For example, the first PUCCH resource may be configured using RRC signaling, MAC-CE signaling, and/or other types of signaling/commands. In some embodiments, a PRI (and/or other indicators/information) may be used to indicate/provide/specify the first PUCCH resource (or other resources). The DCI (or other information) may carry/include/provide the PRI. In some embodiments, a second PUCCH resource (or other resources) may carry/include/specify the HARQ-ACK codebook and/or other information. The wireless communication device may determine/identify the second PUCCH resource from a set of PUCCH resources, wherein the set of PUCCH resources may comprise one or more PUCCH resources. The set of PUCCH resources may be associated/related/linked with a same time unit/instance for PUCCH transmission corresponding to the HARQ-ACK information. The set of PUCCH resources may comprise a candidate resource for a PUCCH transmission that carries/includes/specifies one or more HARQ-ACK information.

Referring now to operation (1156), and in some embodiments, the wireless communication device may transmit/send/broadcast a PUCCH transmission (or other transmissions) to the wireless communication node. The wireless communication node may receive/obtain the PUCCH transmission (or other transmissions) from the wireless communication device. The PUCCH transmission may carry/include/provide/indicate/specify the HARQ-ACK information (or other information). In some embodiments, a time offset may refer/correspond to a time offset between the DCI and the PUCCH transmission. The time offset can be determined/configured according to at least a first parameter. The first parameter may be configured according/using/based on a predefined configuration, a capability of the wireless communication device, RRC signaling, MAC-CE signaling, another DCI, and/or other signaling/configurations/capabilities/information. The first parameter may indicate/provide a number/amount of available UL time units (e.g., a time slot and/or other time instances) relative/according to a time unit of the DCI (or other information). In some embodiments, a first uplink time unit (e.g., a time slot and/or other time unit/duration) may include the PUCCH transmission (and/or other transmissions). The first uplink time unit may correspond to a first uplink time unit after/following a time unit/instance of the DCI (or other information).

In some embodiments, a procedure associated/related with the DCI may trigger/cause an indication of a beam state in the DCI. If the procedure triggers/causes the indication of the beam state in the DCI, the beam state may be applied to at least one DL and/or UL signal. The DL and/or UL signal may correspond to a DL and/or UL signal Q time units (e.g., a time slot and/or other time instances) after/following the HARQ-ACK information transmission. In some embodiments, Q may be determined/configured according to a predefined configuration, a capability of the wireless communication device, RRC signaling, MAC-CE signaling, another DCI, and/or other types of signaling/capabilities/configurations/information. In some embodiments, a mode of the HARQ-ACK codebook may be configured as "semi-static". If a mode of the HARQ-ACK codebook is configured as "semi-static", the HARQ-ACK information may be determined according to one or more parameters/offsets/information. The one or more parameters/offsets/information may include a time offset from a DL data channel (or other data channel) to a corresponding HARQ-ACK, a time domain resource parameter, a subcarrier spacing for DL, a subcarrier spacing for UL, and/or at least one parameter for DL and/or UL patterns (e.g., *TDD-UL-DL-ConfigurationCommon, TDD-UL-DL-ConflgDedicated,* and/or other parameters for DL/UL patterns).

In some embodiments, the time offset from a DL data channel to a corresponding HARQ-ACK may be indicated/specified/provided/selected from a set of time offsets (e.g., a set of one or more time offsets). The set of time offsets may include or correspond to a set of time offsets from the DL data channel to the corresponding HARQ-ACK. The set of time offsets may include or correspond to a set of default time offsets from the DL data channel to the corresponding HARQ-ACK. The set of time offsets may correspond to the set of default time offsets if the DCI has DCI format 1_0 (or other DCI formats) and/or the set of time offsets is not configured. In some embodiments, the time offset may indicate/provide/specify/include a number/amount of available UL time units (e.g., one or more available UL time units). The number of available UL time units can be relative to a time unit (e.g., time slot and/or other time instances) of the DCI. In some embodiments, a set of time domain resource parameters for a DL signal can include/indicate/provide at least one time domain resource parameter. The time domain resource parameter may be selected/identified/indicated from the set of time domain resource parameters. In some embodiments, the procedure can comprise a reference channel determination (e.g., virtual PDSCH and/or other reference channel determinations). A reference channel may be associated/related with at least one time domain resource parameter (e.g., *PDSCH-TimeDomainResourceAllocationList* and/or other parameters). The reference channel can be used to determine the location of the HARQ-ACK information in the HARQ-ACK codebook.

In some embodiments, the reference channel determination may be in a same time unit/instance as the DCI (or other information). In some embodiments, a slot offset between the DCI and the reference channel determination may have value of zero (or other values). In some embodiments, slot offset between the DCI and the DL channel reception and/or a slot offset between the DCI and the DL channel release may correspond to zero (or other values). In some embodiments, the location of the HARQ-ACK information may be the same as a location of a HARQ-ACK information corresponding to a reference channel and/or DL channel reception determined using the time domain resource parameter.

In some embodiments, a mode of the HARQ-ACK codebook may be configured as "dynamic". If the mode of the HARQ-ACK codebook is configured as "dynamic", the location of the HARQ-ACK information may be determined according to one or more time offsets, monitoring occasions, parameters, and/or other information. In some embodiments, the location of the HARQ-ACK information can be determined according to at least one time offset, such as a time offset from the DCI to the HARQ-ACK information, a time offset from an associated/related PDCCH to the HARQ-ACK information, a time offset from the DCI to a PDSCH (or other DL data channels), a time offset from the associated PDCCH to the PDSCH (or other DL data channels), and/or a time offset from a DL data channel (e.g., PDSCH) to the HARQ-ACK information. In some embodiments, the location of the HARQ-ACK information may be determined according to a PDSCH monitoring occasion and/or a DAI parameter. The DAI parameter may comprise at least one of a counter DAI and/or a total DAI. The counter DAI may indicate/specify the cumulative number of {serving cell, PDCCH} pairs up to a current serving cell and/or a current monitoring occasion. The total DAI may indicate/provide/specify a total number of {serving cell, PDCCH} pairs up to the current monitoring occasion. In some embodiments, the DAI parameter may be associated/related/linked with a CORESET pool ID, a set of one or more DCI formats, and/or other identifiers/information. In some embodiments, the wireless communication device may determine/configure a counter for bits of the HARQ-ACK information. The wireless communication device may use a value of the counter DAI (or other values) to determine the counter for bits of the HARQ-ACK information. The DCI (or other information) may include/carry/provide the value of the counter DAI. For example, the DCI may include the value of the counter DAI to save DCI signaling overhead (e.g., the total DAI may not be provided). In some embodiments, a value of the counter DAI may be smaller/less than a value of the total DAI after a last/recent monitored occasion. If the value of the counter DAI is less than the value of the total DAI, the counter for bits of the HARQ-ACK information may have a value corresponding to the counter DAI plus one (or other values).

In some embodiments, MAC-CE signaling, RRC signaling, and/or other types of signaling can be used to configure and/or reconfigure one or more parameters corresponding to the DCI (or other information). The wireless communication device may receive/obtain the RRC signaling and/or MAC-CE signaling from the wireless communication node. The wireless communication node may sent/transmit/broadcast the RRC signaling and/or the MAC-CE signaling to the wireless communication device. The one or more parameters may comprise at least one of a specific RNTI, a parameter of a starting bit indication, a number of indicated beam states, and/or a type of HARQ-ACK procedure corresponding to the DCI (e.g., semi-static and/or dynamic). In some embodiments, the one or more parameters may comprise support of DAI and/or total DAI field(s) in a DCI, one or more CORESETs and/or search space sets associated with the DCI, and/or other information. In some embodiments, the one or more parameters may comprise a CORESET pool ID, an ID of the wireless communication device (e.g., UE ID), a panel and/or antenna group of the wireless communication device, and/or other information. In some embodiments, the wireless communication device may receive/obtain a configuration for the wireless communication device from the wireless communication node. The wireless communication node may send/transmit/broadcast the configuration to the wireless communication device. The configuration for the wireless communication device may correspond to a configuration to support a HARQ-ACK procedure for the DCI. The wireless communication node may send the configuration responsive to a SRS, a PUCCH, and/or a PUSCH not being configured with spatial relation information. The wireless communication device may receive the configuration responsive to the SRS, the PUSCH, and/or the PUCCH not being configured with an UL power control parameter (or other parameters). The wireless communication device may obtain the configuration responsive to a specific RRC signaling and/or other types of signaling.

In some embodiments, the SRS, the PUSCH, and/or the PUCCH may not be configured with a parameter of PL-RS (or other parameters). In some embodiments, the SRS associated with the PUSCH may not be configured with the parameter of PL-RS. In some embodiments, the SRS for non-codebook and/or codebook transmission, may not be configured with the parameter of PL-RS (or other parameters). In some embodiments, a HARQ process number field in the DCI may be set/configured to a specific value. In some embodiments, a redundancy version (RV) field in the DCI may be set/configured to a specific value. In some embodiments, a modulation and coding scheme (MCS) field in the DCI may be set/configured to a specific value. In some embodiments, a frequency domain resource assignment field in the DCI (or other fields) may be set to a specific value. In some embodiments, an UL and/or DL shared channel indicator field in the DCI (or other fields) can be set to a specific value. In some embodiments, the UL and/or DL shared channel indicator field (or other fields) may be set/configured to a specific value. In some embodiments, if the UL and/or DL shared channel indicator field is configured to the specific value, an UL and/or DL shared channel may be precluded from being transmitted/sent.

While various embodiments of the present solution have been described above, it should be understood that they have been presented by way of example only, and not by way of limitation. Likewise, the various diagrams may depict an example architectural or configuration, which are provided to enable persons of ordinary skill in the art to understand example features and functions of the present solution. Such persons would understand, haowever, that the solution is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described illustrative embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques. To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present solution.

Additionally, memory or other storage, as well as communication components, may be employed in embodiments of the present solution. It will be appreciated that, for clarity purposes, the above description has described embodiments of the present solution with reference to different functional units and processors. However, it will be apparent that any suitable distribution of functionality between different functional units, processing logic elements or domains may be used without detracting from the present solution. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the embodiments described in this disclosure will be readily apparent to those skilled in the art, and the general principles defined herein can be applied to other embodiments without departing from the scope of this disclosure. Thus, the disclosure is not intended to be limited to the embodiments shown herein, but is to be accorded the widest scope consistent with the novel features and principles disclosed herein, as recited in the claims below.

## Claims

1. A method comprising:
receiving, by a wireless communication device (104) from a wireless communication node (102), a downlink control information, DCI, indicating at least a transmission configuration indicator, TCI, state without scheduling a physical downlink shared channel, PDSCH, reception, wherein a redundancy version, RV, field of the DCI is set to all "1"s and a modulation and coding scheme, MCS, field in the DCI is set to all "1"s;
determining, by the wireless communication device (104), a location of hybrid automatic repeat request acknowledgement, HARQ-ACK, information corresponding to the DCI in a HARQ-ACK codebook, and a first physical uplink control, PUCCH, resource, wherein the location of the HARQ-ACK information is same as a location of a HARQ-ACK information corresponding to a virtual PDSCH reception; and
transmitting, by the wireless communication device (104) to the wireless communication node (102), a PUCCH transmission that carries the HARQ-ACK information,
wherein the TCI state is applied to a downlink or uplink signal Q time units after transmitting the PUCCH transmission carrying the HARQ-ACK information, where Q is determined according to a radio resource control, RRC, signaling.

2. The method of claim 1, comprising:
generating, by the wireless communication device (104), an acknowledgment, ACK, value for the HARQ-ACK information responsive to the wireless communication device (104) detecting the DCI.

3. The method of claim 1, wherein a mode of the HARQ-ACK codebook is configured as "semi-static", and the location of the HARQ-ACK information is determined according to a time domain resource parameter.

4. The method of claim 3, wherein the time domain resource parameter is indicated from a set of time domain resource parameters for a PDSCH.

5. The method of claim 3, wherein a virtual PDSCH is associated with the time domain resource parameter, and is used for determining the location of the HARQ-ACK information in the HARQ-ACK codebook.

6. The method of claim 3, wherein the location of the HARQ-ACK information corresponding to the virtual PDSCH reception is determined using the time domain resource parameter.

7. The method of claim 1, comprising:
receiving, by the wireless communication device (104) from the wireless communication node (102), the RRC signaling to configure a parameter corresponding to the DCI, wherein the parameter comprises:
a specific radio network temporary identifier, RNTI.

8. The method of claim 1, wherein
a frequency domain resource assignment field in the DCI is set to all "1"s or all "0"s.

9. A method comprising:
transmitting, by a wireless communication node (102) to a wireless communication device (104), a downlink control information, DCI, indicating at least a transmission configuration indicator, TCI, state without scheduling a physical downlink shared channel, PDSCH, reception, wherein a redundancy version, RV, field in the DCI is set to all "1"s and a modulation and coding scheme, MCS, field in the DCI is set to all "1"s,
wherein the wireless communication device (104) determines a location of hybrid automatic repeat request acknowledgement, HARQ-ACK, information corresponding to the DCI in a HARQ-ACK codebook and a first physical uplink control, PUCCH, resource, wherein the location of the HARQ-ACK information is same as a location of a HARQ-ACK information corresponding to a virtual PDSCH reception, and
receiving, by the wireless communication node (102) from the wireless communication device (104), a PUCCH transmission that carries the HARQ-ACK information,
wherein the TCI state is applied by the wireless communication device (104), to a downlink or uplink signal Q time units after the PUCCH transmission carrying the HARQ-ACK information is received, where Q is determined by the wireless communication device (104) according to a radio resource control, RRC, signaling.

10. The method of claim 9, wherein the wireless communication node (102) receives the PUCCH transmission that carries the HARQ-ACK information, responsive to the wireless communication device (104) generating an acknowledgment, ACK, value for the HARQ-ACK information based on the wireless communication device (104) detecting the DCI.

11. A wireless communication device (104), comprising:
at least one processor (236) configured to:
receive, via a transceiver (230) from a wireless communication node (102), a downlink control information, DCI, indication at least a transmission configuration indicator, TCI, state without scheduling a physical downlink shared channel, PDSCH, reception, wherein a redundancy version, RV, field in the DCI is set to all "1"s and a modulation and coding scheme, MCS, field in the DCI is set to all "1"s;
determine a location of hybrid automatic repeat request acknowledgement, HARQ-ACK, information corresponding to the DCI in a HARQ-ACK codebook, and a first physical uplink control, PUCCH, resource, wherein the location of the HARQ-ACK information is same as a location of a HARQ-ACK information corresponding to a virtual PDSCH reception; and
transmit, via the transceiver (230) to the wireless communication node (102), a PUCCH transmission that carries the HARQ-ACK information,
wherein the TCI state is applied to a downlink or uplink signal Q time units after transmitting the PUCCH transmission carrying the HARQ-ACK information, where Q is determined according to a radio resource control, RRC, signaling.

12. A wireless communication node (102), comprising:
at least one processor (214) configured to:
transmit, via a transceiver (210) to a wireless communication device (104), a downlink control information, DCI, indicating at least a transmission configuration indicator, TCI, state without scheduling a physical downlink shared channel, PDSCH, reception, wherein a redundancy version, RV, field in the DCI is set to all "1"s and a modulation and coding scheme, MCS, field in the DCI is set to all "1"s,
wherein the wireless communication device (104) determines a location of hybrid automatic repeat request acknowledgement, HARQ-ACK, information corresponding to the DCI in a HARQ-ACK codebook and a first physical uplink control, PUCCH, resource, wherein the location of the HARQ-ACK information is same as a location of a HARQ-ACK information corresponding to a virtual PDSCH reception, and
receive, via the transceiver (210) from the wireless communication device (104), a PUCCH transmission that carries the HARQ-ACK information,
wherein the TCI state is applied by the wireless communication device (104), to a downlink or uplink signal Q time units after the PUCCH transmission carrying the HARQ-ACK information is received, where Q is determined by the wireless communication device (104) according to a radio resource control, RRC, signaling.

## Patentansprüche

1. Verfahren, umfassend:
Empfangen, durch eine Vorrichtung zur drahtlosen Kommunikation (104) von einem Knoten zur drahtlosen Kommunikation (102), einer Downlink-Steuerinformation, DCI, die mindestens einen Zustand eines Übertragungskonfigurationsindikators, TCI, angibt, ohne einen Empfang eines physischen gemeinsamen Downlink-Kanals, PDSCH, zu planen, wobei die Werte eines Redundanzversionsfelds, RV-Felds, der DCI alle auf "1" gesetzt sind und die Werte eines Modulations- und Codierschemafelds, MCS-Felds, in der DCI alle auf "1" gesetzt sind;
Bestimmen, durch die Vorrichtung zur drahtlosen Kommunikation (104), eines Speicherorts einer Information zur Bestätigung hybrider automatischer Wiederholungsanfragen, HARQ-ACK, die der DCI in einem HARQ-ACK-Codebuch entspricht, und einer ersten Ressource einer physischen Uplink-Steuerung, PUCCH, wobei der Speicherort der HARQ-ACK-Information derselbe ist wie ein Speicherort einer HARQ-ACK-Information, die einem Empfang eines virtuellen PDSCH entspricht; und
Übertragen, durch die Vorrichtung zur drahtlosen Kommunikation (104) an den Knoten zur drahtlosen Kommunikation (102), einer PUCCH-Übertragung, die die HARQ-ACK-Information enthält,
wobei der TCI-Zustand Q Zeiteinheiten nach dem Übertragen der PUCCH-Übertragung, die die HARQ-ACK-Information enthält, auf ein Downlink- oder Uplink-Signal angewendet wird, wobei Q gemäß einer Funkressourcensteuerungssignalisierung, RRC-Signalisierung, bestimmt wird.

2. Verfahren nach Anspruch 1, umfassend:
Erzeugen, durch die Vorrichtung zur drahtlosen Kommunikation (104), eines Bestätigungswerts, ACK-Werts, für die HARQ-ACK-Information als Reaktion darauf, dass die Vorrichtung zur drahtlosen Kommunikation (104) die DCI erkennt.

3. Verfahren nach Anspruch 1, wobei ein Modus des HARQ-ACK-Codebuchs als "halbstatisch" konfiguriert ist und der Speicherort der HARQ-ACK-Information gemäß einem Zeitdomänenressourcenparameter bestimmt wird.

4. Verfahren nach Anspruch 3, wobei der Zeitdomänenressourcenparameter aus einem Satz von Zeitdomänenressourcenparametern für einen PDSCH angegeben wird.

5. Verfahren nach Anspruch 3, wobei ein virtueller PDSCH dem Zeitdomänenressourcenparameter zugeordnet ist und verwendet wird, um den Speicherort der HARQ-ACK-Information im HARQ-ACK-Codebuch zu bestimmen.

6. Verfahren nach Anspruch 3, wobei der Speicherort der HARQ-ACK-Information, die dem Empfang eines virtuellen PDSCH entspricht, unter Verwendung des Zeitdomänenressourcenparameters bestimmt wird.

7. Verfahren nach Anspruch 1, umfassend:
Empfangen, durch die Vorrichtung zur drahtlosen Kommunikation (104) von dem Knoten zur drahtlosen Kommunikation (102), der RRC-Signalisierung, um einen Parameter zu konfigurieren, der der DCI entspricht, wobei der Parameter umfasst:
eine spezifische temporäre Funknetzkennung, RNTI.

8. Verfahren nach Anspruch 1, wobei
die Werte eines Frequenzdomänenressourcenzuweisungsfelds in der DCI alle auf "1" oder alle auf "0" gesetzt sind.

9. Verfahren, umfassend:
Übertragen, durch einen Knoten zur drahtlosen Kommunikation (102) an eine Vorrichtung zur drahtlosen Kommunikation (104), einer Downlink-Steuerinformation, DCI, die mindestens einen Zustand eines Übertragungskonfigurationsindikators, TCI, angibt, ohne den Empfang eines physischen gemeinsamen Downlink-Kanals, PDSCH, zu planen, wobei die Werte eines Redundanzversionsfelds, RV-Feld, in der DCI alle auf "1" gesetzt sind und die Werte eines Modulations- und Codierschemafelds, MCS-Felds, in der DCI alle auf "1" gesetzt sind,
wobei die Vorrichtung zur drahtlosen Kommunikation (104) einen Speicherort einer Information zur Bestätigung hybrider automatischer Wiederholungsanfragen, HARQ-ACK, die der DCI in einem HARQ-ACK-Codebuch entspricht, und einer ersten Ressource einer physischen Uplink-Steuerung, PUCCH, bestimmt, wobei der Speicherort der HARQ-ACK-Information derselbe ist wie ein Speicherort einer HARQ-ACK-Information, die einem Empfang eines virtuellen PDSCH entspricht, und
Empfangen, durch den Knoten zur drahtlosen Kommunikation (102) von der Vorrichtung zur drahtlosen Kommunikation (104), einer PUCCH-Übertragung, die die HARQ-ACK-Informationen enthält,
wobei der TCI-Zustand, durch die Vorrichtung zur drahtlosen Kommunikation (104), Q Zeiteinheiten nach dem Empfangen der PUCCH-Übertragung, die die HARQ-ACK-Informationen enthält, auf ein Downlink- oder Uplink-Signal angewendet wird, wobei Q durch die Vorrichtung zur drahtlosen Kommunikation (104) gemäß einer Funkressourcensteuerungssignalisierung, RRC-Signalisierung, bestimmt wird.

10. Verfahren nach Anspruch 9, wobei der Knoten zur drahtlosen Kommunikation (102) die PUCCH-Übertragung, die die HARQ-ACK-Informationen enthält, als Reaktion darauf empfängt, dass die Vorrichtung zur drahtlosen Kommunikation (104) einen Bestätigungswert, ACK-Wert, für die HARQ-ACK-Information basierend darauf erzeugt, dass die Vorrichtung zur drahtlosen Kommunikation (104) die DCI erkennt.

11. Vorrichtung zur drahtlosen Kommunikation (104), umfassend:
mindestens einen Prozessor (236), der konfiguriert ist zum:
Empfangen, über einen Sendeempfänger (230) von einem Knoten zur drahtlosen Kommunikation (102), einer Downlink-Steuerinformation, DCI, die mindestens einen Zustand eines Übertragungskonfigurationsindikators, TCI, angibt, ohne einen Empfang eines physischen gemeinsamen Downlink-Kanals, PDSCH, zu planen, wobei die Werte eines Redundanzversionsfelds, RV-Felds, in der DCI alle auf "1" gesetzt sind und die Werte eines Modulations- und Codierschemafelds, MCS-Felds, in der DCI alle auf "1" gesetzt sind;
Bestimmen eines Speicherorts einer Information zur Bestätigung hybrider automatischer Wiederholungsanfragen, HARQ-ACK, die der DCI in einem HARQ-ACK-Codebuch entspricht, und einer ersten Ressource einer physischen Uplink-Steuerung, PUCCH, wobei der Speicherort der HARQ-ACK-Information derselbe ist wie ein Speicherort einer HARQ-ACK-Information, die einem Empfang eines virtuellen PDSCH entspricht; und
Übertragen, über den Sendeempfänger (230) an den Knoten zur drahtlosen Kommunikation (102), einer PUCCH-Übertragung, die die HARQ-ACK-Information enthält,
wobei der TCI-Zustand Q Zeiteinheiten nach dem Übertragen der PUCCH-Übertragung, die die HARQ-ACK-Information enthält, auf ein Downlink- oder Uplink-Signal angewendet wird, wobei Q gemäß einer Funkressourcensteuerungssignalisierung, RRC-Signalisierung, bestimmt wird.

12. Knoten zur drahtlosen Kommunikation (102), umfassend:
mindestens einen Prozessor (214), der konfiguriert ist zum:
Übertragen, über einen Sendeempfänger (210) an eine Vorrichtung zur drahtlosen Kommunikation (104), einer Downlink-Steuerinformation, DCI, die mindestens einen Zustand eines Übertragungskonfigurationsindikators, TCI, angibt, ohne den Empfang eines physischen gemeinsamen Downlink-Kanals, PDSCH, zu planen, wobei die Werte eines Redundanzversionsfelds, RV-Felds, in der DCI alle auf "1" gesetzt sind und die Werte eines Modulations- und Codierschemafelds, MCS-Felds, in der DCI alle auf "1" gesetzt sind,
wobei die Vorrichtung zur drahtlosen Kommunikation (104) einen Speicherort einer Information zur Bestätigung hybrider automatischer Wiederholungsanfragen, HARQ-ACK, die der DCI in einem HARQ-ACK-Codebuch entspricht, und einer ersten Ressource einer physischen Uplink-Steuerung, PUCCH, bestimmt, wobei der Speicherort der HARQ-ACK-Information derselbe ist wie ein Speicherort einer HARQ-ACK-Information, die einem Empfang eines virtuellen PDSCH entspricht, und
Empfangen, über den Sendeempfänger (210) von der Vorrichtung zur drahtlosen Kommunikation (104), einer PUCCH-Übertragung, die die HARQ-ACK-Information enthält,
wobei der TCI-Zustand, durch die Vorrichtung zur drahtlosen Kommunikation (104), Q Zeiteinheiten nach dem Empfangen der PUCCH-Übertragung, die die HARQ-ACK-Informationen enthält, auf ein Downlink- oder Uplink-Signal angewendet wird, wobei Q durch die Vorrichtung zur drahtlosen Kommunikation (104) gemäß einer Funkressourcensteuerungssignalisierung, RRC-Signalisierung, bestimmt wird.

## Revendications

1. Procédé comprenant :
la réception, par un dispositif de communication sans fil (104) en provenance d'un nœud de communication sans fil (102), d'informations de commande de liaison descendante, DCI, indiquant au moins un état d'indicateur de configuration de transmission, TCI, sans programmer une réception de canal physique partagé de liaison descendante, PDSCH, dans lequel un champ de version de redondance, RV, des DCI est réglé sur tous les « 1 » et un champ de schéma de modulation et de codage, MCS, dans les DCI est réglé sur tous les « 1 » ;
la détermination, par le dispositif de communication sans fil (104), d'un emplacement d'informations d'accusé de réception de demande de répétition automatique hybride, HARQ-ACK, correspondant aux DCI dans un livre de codes HARQ- ACK, et d'une première ressource de commande de liaison montante physique, PUCCH, dans lequel l'emplacement des informations HARQ-ACK est le même qu'un emplacement d'informations HARQ-ACK correspondant à une réception de PDSCH virtuel ; et
la transmission, par le dispositif de communication sans fil (104) au nœud de communication sans fil (102), d'une transmission PUCCH qui transporte les informations HARQ-ACK,
dans lequel l'état TCI est appliqué à un signal de liaison montante ou de liaison descendante à Q unités de temps après la transmission de la transmission PUCCH transportant les informations HARQ-ACK, où Q est déterminé selon une signalisation de commande de ressources radio, RRC.

2. Procédé selon la revendication 1, comprenant :
la génération, par le dispositif de communication sans fil (104), d'une valeur d'accusé de réception, ACK, pour les informations HARQ-ACK en réponse à la détection des DCI par le dispositif de communication sans fil (104).

3. Procédé selon la revendication 1, dans lequel un mode du livre de codes HARQ-ACK est configuré comme « semi-statique », et l'emplacement des informations HARQ-ACK est déterminé selon un paramètre de ressource de domaine temporel.

4. Procédé selon la revendication 3, dans lequel le paramètre de ressource de domaine temporel est indiqué à partir d'un ensemble de paramètres de ressource de domaine temporel pour un PDSCH.

5. Procédé selon la revendication 3, dans lequel un PDSCH virtuel est associé au paramètre de ressource de domaine temporel, et est utilisé pour déterminer l'emplacement des informations HARQ-ACK dans le livre de codes HARQ-ACK.

6. Procédé selon la revendication 3, dans lequel l'emplacement des informations HARQ-ACK correspondant à la réception de PDSCH virtuel est déterminé à l'aide du paramètre de ressource de domaine temporel.

7. Procédé selon la revendication 1, comprenant :
la réception, par le dispositif de communication sans fil (104) en provenance du nœud de communication sans fil (102), de la signalisation RRC pour configurer un paramètre correspondant aux DCI, dans lequel le paramètre comprend :
un identifiant temporaire de réseau radio, RNTI, spécifique.

8. Procédé selon la revendication 1, dans lequel
un champ d'affectation de ressource de domaine fréquentiel dans les DCI est réglé sur tous les « 1 » ou tous les « 0 ».

9. Procédé comprenant :
la transmission, par un nœud de communication sans fil (102) à un dispositif de communication sans fil (104), d'informations de commande de liaison descendante, DCI, indiquant au moins un état d'indicateur de configuration de transmission, TCI, sans programmer une réception de canal physique partagé de liaison descendante, PDSCH, dans lequel un champ de version de redondance, RV, dans les DCI est réglé sur tous les « 1 » et un champ de schéma de modulation et de codage, MCS, dans les DCI est réglé sur tous les « 1 »,
dans lequel le dispositif de communication sans fil (104) détermine un emplacement d'informations d'accusé de réception de demande de répétition automatique hybride, HARQ-ACK, correspondant aux DCI dans un livre de codes HARQ-ACK et une première ressource de commande de liaison montante physique, PUCCH, dans lequel l'emplacement des informations HARQ-ACK est identique à un emplacement d'informations HARQ-ACK correspondant à une réception de PDSCH virtuel, et
la réception, par le nœud de communication sans fil (102) en provenance du dispositif de communication sans fil (104), d'une transmission PUCCH qui transporte les informations HARQ-ACK,
dans lequel l'état TCI est appliqué par le dispositif de communication sans fil (104) à un signal de liaison montante ou de liaison descendante à Q unités de temps après la réception de la transmission PUCCH transportant les informations HARQ-ACK, où Q est déterminé par le dispositif de communication sans fil (104) selon une signalisation de commande de ressources radio, RRC.

10. Procédé selon la revendication 9, dans lequel le nœud de communication sans fil (102) reçoit la transmission PUCCH qui transporte les informations HARQ-ACK, en réponse à la génération, par le dispositif de communication sans fil (104), d'une valeur d'accusé de réception, ACK, pour les informations HARQ-ACK sur la base de la détection des DCI par le dispositif de communication sans fil (104).

11. Dispositif de communication sans fil (104) comprenant :
au moins un processeur (236) configuré pour :
recevoir, par l'intermédiaire d'un transmetteur-récepteur (230) en provenance d'un nœud de communication sans fil (102), des informations de commande de liaison descendante, DCI, indiquant au moins un état d'indicateur de configuration de transmission, TCI, sans programmer une réception de canal physique partagé de liaison descendante, PDSCH, dans lequel un champ de version de redondance, RV, dans les DCI est réglé sur tous les « 1 » et un champ de schéma de modulation et de codage, MCS, dans les DCI est réglé sur tous les « 1 » ;
déterminer un emplacement d'informations d'accusé de réception de demande de répétition automatique hybride, HARQ-ACK, correspondant aux DCI dans un livre de codes HARQ-ACK, et une première ressource de commande de liaison montante physique, PUCCH, dans lequel l'emplacement des informations HARQ-ACK est identique à un emplacement d'informations HARQ-ACK correspondant à une réception de PDSCH virtuel ; et
transmettre, par l'intermédiaire du transmetteur-récepteur (230) au nœud de communication sans fil (102), une transmission PUCCH qui transporte les informations HARQ-ACK,
dans lequel l'état TCI est appliqué à un signal de liaison montante ou de liaison descendante à Q unités de temps après la transmission de la transmission PUCCH transportant les informations HARQ-ACK, où Q est déterminé selon une signalisation de commande de ressources radio, RRC.

12. Nœud de communication sans fil (102), comprenant :
au moins un processeur (214) configuré pour :
transmettre, par l'intermédiaire d'un transmetteur-récepteur (210) à un dispositif de communication sans fil (104), des informations de commande de liaison descendante, DCI, indiquant au moins un état d'indicateur de configuration de transmission, TCI, sans programmer une réception de canal physique partagé de liaison descendante, PDSCH, dans lequel un champ de version de redondance, RV, dans les DCI est réglé sur tous les « 1 » et un champ de schéma de modulation et de codage, MCS, dans les DCI est réglé sur tous les « 1 »,
dans lequel le dispositif de communication sans fil (104) détermine un emplacement d'informations d'accusé de réception de demande de répétition automatique hybride, HARQ-ACK, correspondant aux DCI dans un livre de codes HARQ-ACK et une première ressource de commande de liaison montante physique, PUCCH, dans lequel l'emplacement des informations HARQ-ACK est identique à un emplacement d'informations HARQ-ACK correspondant à une réception de PDSCH virtuel, et
recevoir, par l'intermédiaire du transmetteur-récepteur (210) en provenance du dispositif de communication sans fil (104), une transmission PUCCH qui transporte les informations HARQ-ACK,
dans lequel l'état TCI est appliqué par le dispositif de communication sans fil (104) à un signal de liaison montante ou de liaison descendante à Q unités de temps après la réception de la transmission PUCCH transportant les informations HARQ-ACK, où Q est déterminé par le dispositif de communication sans fil (104) selon une signalisation de commande de ressources radio, RRC.
